# EUROPEAN PATENT SPECIFICATION

(11) **EP 2 123 507 B1**
(45) Date of publication and mention of the grant of the patent: **25.05.2016**
(21) Application number: 09159003.4
(22) Date of filing: 29.04.2009
(51) Int. Cl.: B60N 2/42

(54) **Vehicle seat structure**
Fahrzeugsitzstruktur
Structure de siège de véhicule

(30) Priority: 21.05.2008 JP 2008133229; 21.05.2008 JP 2008133230; 02.07.2008 JP 2008173706
(43) Date of publication of application: 25.11.2009
(73) Proprietor: Mazda Motor Corporation, Aki-gun Hiroshima 730-8670 (JP)
(72) Inventor: Nagatani, Takashi, Hiroshima 730-8670 (JP); Takemura, Masaki, Hiroshima 730-8670 (JP); Okamoto, Tomoki, Hiroshima 730-8670 (JP); Kamimoto, Ichiro, Hiroshima 730-8670 (JP); Iwamoto, Tatsuhiko, Hiroshima 730-8670 (JP); Hirata, Daisuke, Hiroshima 730-8670 (JP)
(74) Representative: Herrmann, Uwe

(56) References cited:
- FR-A- 2 897 566
- US-A- 2 789 650
- US-A- 2 970 862
- US-A1- 2005 264 051

## Description

### BACKGROUND OF THE INVENTION

### 1. Field of the Invention

The present invention relates to a vehicle seat structure which includes a seat cushion, a seat back connected to the seat cushion, and a seated-occupant restraining seat belt apparatus.

### 2. Description of the Related Art

Heretofore, there has been a concern about a phenomenon that, if a frontal vehicle collision occurs under a condition that an upper body of an occupant seated in a seat of a vehicle is restrained by a seat belt, a chest of the occupant is constricted by the seat belt as the occupant is pushed and displaced in a frontward direction of a vehicle body by an inertia force.

In this context, with a view to suppressing a frontward displacement of an occupant during a frontal vehicle collision, it has been proposed to provide a frontward-displacement suppressing member inside a seat cushion to extend in a widthwise (i.e., lateral) direction of a vehicle body.

According to this structure, in the event of a frontal vehicle collision, the frontward-displacement suppressing member can restrict a frontward displacement of a seated occupant (particularly, a lumbar region of the occupant) while absorbing shock caused by the frontward displacement, so as to reduce an injury value of the occupant due to constriction by a seat belt.

JP 2001-233101A (hereinafter referred to as "Patent Document 1") discloses a structure for a seat mounted on an engine cover of a cab-over vehicle, wherein a reinforcing plate is provided to protrude in a generally chevron shape in vertical section from an upper surface of the engine cover into a seat cushion of the seat. In the event of a frontal vehicle collision, the protrusion of the reinforcing plate can restrict a frontward displacement of a seated occupant.

JP 08-127257A (hereinafter referred to as "Patent Document 2") discloses a structure for a fuel tank disposed under a rear floor panel, wherein a cross member having a hat-like shape in vertical section is attached onto the rear floor panel to cover a fuel tank-cooling air ventilation hole and protrude into a seat cushion on an upper side thereof.

Although not explicitly disclosed in the Patent Document 2, in the event of a frontal vehicle collision, the protrusion of the cross member can also restrict a frontward displacement of a seated occupant, in terms of results.

JP 2000-103273A (hereinafter referred to as "Patent Document 3") discloses a structure having a rod-shaped anti-submarine mechanism which is attached to a cushion frame of a seat cushion to extend in a lateral direction of a vehicle body. In this structure, the anti-submarine mechanism serving as a frontward-displacement suppressing member is attached to a seat (seat cushion), instead of being attached to a floor of the vehicle body, which provides an additional advantage of being able to readily perform an operation of mounting the seat cushion onto the floor, without regard to the presence of the frontward-displacement suppressing member.

However, none of the conventional structures disclosed in the Patent Documents 1, 2 and 3 is configured to restrict a frontward displacement of the seat cushion. That is, in the event of a frontal vehicle collision, the seat cushion is displaced frontwardly relative to a vehicle body. In this case, even if it is attempted to restrict a forward displacement of an occupant by the frontward-displacement suppressing member during a frontal vehicle collision, a lower body of the occupant will be eventually displaced frontwardly along with the frontward displacement of the seat cushion, resulting in failing to sufficiently bring out an injury value-reducing effect of the frontward-displacement suppressing member.

Further, according to an analysis result on the injury value-reducing effect of the frontward-displacement suppressing member, it was found that the structure having one of the reinforcing plate, the cross member and the anti-submarine mechanism simply provided inside a seat cushion as disclosed in the Patent Documents 1, 2 and 3 is likely to fail to reliably restrict a frontward displacement of an occupant during a frontal vehicle collision, resulting in being incapable of sufficiently reducing an injury value.

US-A-2 970 862 discloses a vehicle seat structure according to the preamble of claim 1 and relates to an automotive seat actuating mechanism, wherein, upon collision or impact, a passenger set is moved instantaneously upward at its front end about a transverse axis at the lower rear portion of the seat and wherein the entire seat structure moves bodily forward under the force of inertia.

The inventor of this application also found that a position of the frontward-displacement suppressing member, specifically, a positional relationship with a hip point of a seated occupant, is critical in order to reliably restrict a frontward displacement of the occupant by the frontward-displacement suppressing member.

It is therefore an object of the present invention to provide a vehicle seat structure capable of allowing a frontward-displacement suppressing member to reliably restrict a frontward displacement of an occupant while absorbing shock caused by the frontward displacement, during a frontal vehicle collision, so as to reliably reduce an injury value of the occupant due to constriction by a seat belt.

### SUMMARY OF THE INVENTION

In order to achieve the above object, there is provided a vehicle seat structure as defined by the features of claim 1. According to a first aspect of the present invention, there is provided a vehicle seat structure which includes a seat cushion, a seat back connected to the seat cushion, and a seated-occupant restraining seat belt apparatus. The vehicle seat structure is characterized by comprising a frontward-displacement suppressing member adapted to suppress a frontward displacement of an occupant seated on the seat cushion, during a frontal vehicle collision, wherein the frontward-displacement suppressing member is provided between an upper surface of the seat cushion and a floor of a vehicle body to extend in a lateral direction of the vehicle body in its entirety.

According to a second aspect of the present invention, there is provided a vehicle seat structure which includes a seat cushion, a seat back connected to the seat cushion, and a seated-occupant restraining seat belt apparatus. The vehicle seat structure is characterized in that the seat belt apparatus includes a lap belt, and the seat cushion is provided with a cushion pad and a frontward-displacement suppressing member adapted to suppress a frontward displacement of an occupant seated on the seat cushion, during a frontal vehicle collision, wherein the frontward-displacement suppressing member is adapted to be set at an adequate position falling within a positional range spaced apart from a hip point of the seated occupant in a frontward direction of the vehicle body by a distance of zero to 160 mm, while extending in a lateral direction of a vehicle body inside the seat cushion.

In the above vehicle seat structure, in the event of a frontal vehicle collision, a frontward displacement of an occupant is suppressed by the frontward-displacement suppressing member set at the adequate position. This makes it possible to allow the frontward-displacement suppressing member to effectively bring out an occupant's frontward displacement-suppressing effect and a shock-absorbing effect so as to reduce an injury value of the occupant due to constriction by a seat belt.

According to a third aspect of the present invention, there is provided a vehicle seat structure which includes a seat cushion, a seat back connected to the seat cushion, and a seated-occupant restraining seat belt apparatus. The vehicle seat structure is characterized in that the seat belt apparatus includes a lap belt and a lap pretensioner mechanism, and the seat cushion is provided with a cushion pad and a frontward-displacement suppressing member adapted to suppress a frontward displacement of an occupant seated on the seat cushion, during a frontal vehicle collision, wherein the frontward-displacement suppressing member is adapted to be set at an adequate position falling within a positional range spaced apart from a hip point of the seated occupant in a frontward direction of the vehicle body by a distance of zero to 100 mm, while extending in a lateral direction of a vehicle body inside the seat cushion.

In a vehicle seat structure having the lap pretensioner mechanism adapted to tighten a seat belt during a frontal vehicle collision or the like, in the event of a frontal vehicle collision, a frontward displacement of an occupant will be suppressed by the seat belt (particularly by the lap belt).

Thus, in the above vehicle seat structure, the frontward-displacement suppressing member is adapted to be set at a relatively rearward position closer to the hip point than the adequate position for the vehicle seat structure devoid of the lap pretensioner mechanism. This makes it possible to allow the frontward-displacement suppressing member to effectively bring out an injury value-reducing effect.

As a fourth aspect of the present invention, the vehicle seat structure may further comprises a sensing member adapted to sense a frontward displacement of the seated occupant during a frontal vehicle collision, and a moving member adapted to cause an upward movement of the frontward-displacement suppressing member installed at a position below the adequate position, wherein the sensing member and the moving member are connected to each other by a link member in such a manner as to allow the moving member to move the frontward-displacement suppressing member upwardly in conjunction with the sensing of the frontward displacement of the seated occupant by the sensing member.

In this vehicle seat structure, despite a simple mechanism, a frontward displacement of the occupant during a frontal vehicle collision can be reliably suppressed so as to reduce an injury value due to constriction by a seat belt. Further, in a normal state, the frontward-displacement suppressing member is installed at a position below the adequate position. This makes it possible to keep the seated occupant from feeling irregularities in a seating surface so as to prevent deterioration in seating comfort.

As a fifth aspect of the present invention, the frontward-displacement suppressing member is preferably set at a position falling within the positional range and lying below the hip point (HP) of the seated occupant by a distance 20 to 100 mm.

In this vehicle seat structure, the frontward-displacement suppressing member can more effectively bring out the occupant's frontward displacement-suppressing effect and the shock-absorbing effect so as to further reduce the injury value of the occupant due to the constriction by the seat belt.

According a sixth aspect of the present invention, there is provided a vehicle seat structure placed on a floor of a vehicle body, wherein the vehicle seat structure includes a seat cushion, a seat back connected to the seat cushion, and a seated-occupant restraining seat belt apparatus. The vehicle seat structure is characterized by comprising: a frontward-displacement suppressing member adapted to suppress a frontward displacement of an occupant seated on the seat cushion, during a frontal vehicle collision; and a displacement-restricting member adapted to restrict a frontward displacement of the frontward-displacement suppressing member during the frontal vehicle collision, wherein: the seat belt apparatus includes a lap belt; the frontward-displacement suppressing member is installed to extend in a lateral direction of the vehicle body inside the seat cushion; and the displacement-restricting member is adapted, during the frontal vehicle collision, to substantially fix a position of the frontward-displacement suppressing member within the seat cushion to thereby restrict the frontward displacement of the frontward-displacement suppressing member.

In this vehicle seat structure, the displacement-restricting member is adapted to positionally fix the frontward-displacement suppressing member. Thus, in the event of a frontal vehicle collision, a frontward displacement of an occupant can be suppressed by the frontward-displacement suppressing member, while restricting a frontward displacement of the frontward-displacement suppressing member by the displacement-restricting member. This makes it possible to more reliably suppress the frontward displacement of the occupant by cooperation between the frontward-displacement suppressing member and the displacement-restricting member, so as to further reduce the injury value of the occupant due to the constriction by the seat belt.

In addition, based on the structure where the frontward-displacement suppressing member is positionally fixed by the displacement-restricting member, the seat cushion can be kept from being displaced frontwardly during a frontal vehicle collision. This makes it possible to prevent a lower body of the occupant from being displaced frontwardly together with the seat cushion, so as to allow the frontward-displacement suppressing member to sufficiently bring out the injury value-reducing effect.

Further, the frontward-displacement suppressing member is installed inside the seat cushion. Thus, an operation of mounting the seat cushion onto the floor can be readily performed without regard to the presence of the frontward-displacement suppressing member.

Furthermore, the frontward-displacement suppressing member can be used to serve as a seat cushion-reinforcing member extending in the lateral direction of the vehicle body. In this case, rigidity of the seat cushion can be improved in cooperation with the displacement-restricting member.

As a seventh aspect of the present invention, the displacement-restricting member may be a seat cushion-reinforcing member for reinforcing the seat cushion, wherein the frontward-displacement suppressing member is fixed to the seat cushion-reinforcing member inside the seat cushion.

In this vehicle seat structure, the frontward-displacement suppressing member is fixed to the seat cushion-reinforcing member. Thus, there is no need to additionally provide a support member for allowing the frontward-displacement suppressing member to be fixed thereto. In addition, the frontward-displacement suppressing member fixed to the seat cushion-reinforcing member can bring out an enhanced occupant's frontward displacement-suppressing effect.

As an eighth aspect of the present invention, the seat cushion-reinforcing member may be fixed to the vehicle body.

This vehicle seat structure makes it possible to more reliably prevent the respective frontward displacements of the frontward-displacement suppressing member and the occupant and more reliably suppress the frontward displacement of the seat cushion.

As a ninth aspect of the present invention, the seat cushion-reinforcing member may be a wire member provided inside the seat cushion, wherein the wire member is formed and arranged to have a first portion connected to the vehicle body at a connection position on a rear side of the seat cushion, and a second portion extending from the connection position in the frontward direction of the vehicle body, and wherein the frontward-displacement suppressing member is connected to an upper surface of the second portion of the wire member.

In this vehicle seat structure, even if a load is applied to the wire member and the frontward-displacement suppressing member during a frontal vehicle collision, a frontward displacement of the frontward-displacement suppressing member can be more reliably suppressed by the wire member connected to the vehicle body at the connection position on the rear side of the seat cushion.

As a tenth aspect of the present invention, the displacement-restricting member may be a protruding member which protruding upwardly from the floor at a position frontward of the frontward-displacement suppressing member in a longitudinal direction of the vehicle body.

In this vehicle seat structure, in the event of a frontal vehicle collision, the frontward-displacement suppressing member is brought into contact with the protruding member, so that a frontward displacement of the seat cushion can be suppressed and consequently a frontward displacement of the occupant can be suppressed.

In addition, the displacement-restricting member is provided to the vehicle body, instead of providing to the seat cushion. This makes it possible to facilitate structural simplification of the seat.

As an eleventh aspect of the present invention, the protruding member may be fixed to a vehicle body-reinforcing member for reinforcing the vehicle body.

In this vehicle seat structure, the protruding member is fixed to the vehicle body-reinforcing member. This makes it possible to reliably suppress a frontward displacement of the protruding member and consequently more reliably suppress the respective frontward displacements of the seat cushion and the occupant.

According to a twelfth aspect of the present invention, there is provided a vehicle seat structure placed on a floor of a vehicle body. The vehicle seat structure is characterized by comprising: a seat including a seat cushion having a cushion pad, and a seat back; a seat belt apparatus adapted to restrain an occupant seated in the seat; and a frontward-displacement suppressing member adapted to suppress a frontward displacement of a lower body of the occupant during a frontal vehicle collision, wherein the seat cushion has a concave portion formed in a lower surface thereof to extend in a lateral direction of the vehicle body, and the frontward-displacement suppressing member is attached to the vehicle body in such a manner that it extends inside the concave portion in the lateral direction of the vehicle body.

In this vehicle seat structure, the concave portion is formed in the lower surface of the seat cushion to extend in the lateral direction of the vehicle body, and the forward-displacement suppressing member is attached to the vehicle in such a manner that it extends inside the concave portion in the lateral direction of the vehicle body. Thus, in the event of a frontal vehicle collision, the frontward-displacement suppressing member can suppress a frontward displacement of the lower body of the occupant while absorbing shock caused by the frontward displacement. This makes it possible to sufficiently reduce an injury value of the occupant due to constriction by a seat belt.

As a thirteenth aspect of the present invention, the seat cushion may be internally provided with a wire member having an engagement member which is disposed rearward of the frontward-displacement suppressing member in a longitudinal direction of the vehicle body, and adapted to be engaged with the frontward-displacement suppressing member from a rear side thereof in the longitudinal direction of the vehicle body, during a frontal vehicle collision.

In this vehicle seat structure, the wire member is installed inside the seat cushion, and provided with the engagement member which is disposed rearward of the frontward-displacement suppressing member in the longitudinal direction of the vehicle body and adapted to be engaged with the frontward-displacement suppressing member from the rear side thereof during a frontal vehicle collision, so as to suppress a frontward displacement of the seat cushion during a frontal vehicle collision. This makes it possible to prevent the lower body of the occupant from being displaced frontwardly together with the seat cushion so as to more sufficiently reduce the injury value of the occupant due to the constriction by the seat belt.

As a fourteenth aspect of the present invention, the engagement member may comprise a protruding portion consisting of a part of the wire member which is located rearward of the frontward-displacement suppressing member in the longitudinal direction of the vehicle body and formed to protrude in a rearward direction of the vehicle body.

In this vehicle seat structure, the protruding portion as the engagement member consists of a part of the wire member which is located rearward of the frontward-displacement suppressing member in the longitudinal direction of the vehicle body and formed to protrude in the rearward direction of the vehicle body, wherein the protruding portion is engaged with the frontward-displacement suppressing member from the rear side thereof during a frontal vehicle collision, so as to reliably suppress a frontward displacement of the seat cushion during a frontal vehicle collision. This makes it possible to reliably prevent the lower body of the occupant from being displaced frontwardly together with the seat cushion so as to more sufficiently reduce the injury value of the occupant due to the constriction by the seat belt.

As a fifteenth aspect of the present invention, the frontward-displacement suppressing member may comprise a pair of bar-shaped members arranged side-by-side in the lateral direction of the vehicle body in such a manner that a distance therebetween is gradually reduced in top plan view in the frontward direction of the vehicle body.

In this vehicle seat structure, the pair of bar-shaped members as the frontward-displacement suppressing member are arranged side-by-side in the lateral direction of the vehicle body in such a manner that a distance therebetween is gradually reduced in top plan view in the frontward direction of the vehicle body. Thus, as compared with an arrangement where the bar-shaped members are arranged to extend in parallel in the lateral direction of the vehicle body, the above arrangement can reliably suppress a frontward displacement of the occupant beyond the frontward-displacement suppressing member. This makes it possible to more sufficiently reduce the injury value of the occupant due to the constriction by the seat belt.

As a sixteenth aspect of the present invention, when the floor has a service hole cover which is located under the seat cushion and adapted to cover a service hole for access to a fuel tank disposed below the floor, the frontward-displacement suppressing member may be detachably attached to the vehicle body on an upper side of the service hole cover.

In this vehicle seat structure, the frontward-displacement suppressing member is detachably attached to the vehicle body on an upper side of the service hole cover. Thus, even if the frontward-displacement suppressing member is disposed above the service hole cover, the frontward-displacement suppressing member can be detached from the vehicle body to facilitate access to the fuel tank.

As a seventeenth aspect of the present invention, the frontward-displacement suppressing member is preferably an anti-submarine member formed in an elongated shape.

This vehicle seat structure can effectively suppress a submarine phenomenon that, in the event of a frontal vehicle collision, a lower body of an occupant restrained by a seat belt is displaced frontwardly while slipping through between the seat cushion and the seat belt.

These and other objects, features and advantages of the invention will become more apparent upon reading the following detailed description along with the accompanying drawings.

### BRIEF DESCRIPTION OF THE DRAWINGS

FIG. 1 is a side sectional view showing a seat structure for a rear seat, according to a first embodiment of the present invention.
FIG. 2 is a transparent, top plan view showing a wire frame and an anti-submarine bar, which are installed inside a seat cushion of the rear seat illustrated in FIG 1.
FIG. 3 is a side view enlargedly showing a fixed state of the anti-submarine bar.
FIG. 4 is a perspective view showing a lock portion of the wire frame and its vicinity.
FIG. 5 is a side view showing a state when a dummy seated in the rear seat is restrained by a seat belt apparatus, and an installation point of the anti-submarine bar in a measurement test on shock during a frontal vehicle collision.
FIGS. 6A and 6B are graphs showing results obtained by measuring an injury value when a shock is applied to a chest-equivalent region of the dummy due to constriction by a seat belt, wherein FIG. 6A is a graph showing a measurement result of shock acceleration, and FIG. 6B is a graph showing a measurement result of flexure amount in the chest-equivalent region of the dummy.
FIG. 7 is a side sectional view showing a rear seat structure according to a second embodiment of the present invention.
FIG. 8 is a transparent, top plan view showing a wire frame and an anti-submarine bar, which are installed inside a seat cushion of a rear seat in a rear seat structure according to a third embodiment of the present invention.
FIG. 9 is a side sectional view showing a rear seat structure according to a fourth embodiment of the present invention.
FIG. 10 is a side sectional view showing a rear seat structure according to a fifth embodiment of the present invention.
FIG. 11 is a transparent, top plan view showing a wire frame and an anti-submarine bar, which are installed inside a seat cushion of a rear seat in the rear seat structure illustrated in FIG. 10.
FIG. 12 is a side sectional view showing a rear seat structure according to a sixth embodiment of the present invention.
FIG. 13 is a side view showing a lap pretensioner.
FIG. 14 is a side sectional view showing a rear seat structure according to a seventh embodiment of the present invention.
FIG. 15 is a schematic, transparent, side view showing a rear seat structure according to an eighth embodiment of the present invention.
FIG. 16 is a schematic, transparent, top plan view showing a wire frame and an anti-submarine bar, which are installed inside a seat cushion of a rear seat in the rear seat structure illustrated in FIG. 15.
FIG. 17 is a schematic, transparent, side view showing a rear seat structure according to a ninth embodiment of the present invention, which corresponds to FIG. 15.
FIG. 18 is a schematic, transparent, side view showing a rear seat structure according to a tenth embodiment of the present invention, which corresponds to FIG. 15.
FIG. 19 is a schematic, transparent, top plan view showing a rear seat structure according to an eleventh embodiment of the present invention, which corresponds to FIG. 16.
FIG. 20 is a schematic, transparent, side view showing a rear seat structure according to a twelfth embodiment of the present invention, which corresponds to FIG. 15.
FIG. 21 is a schematic, transparent, top plan view showing the rear seat structure according to the twelfth embodiment.
FIG. 22 is a schematic perspective view showing an anti-submarine bar in a rear seat structure according to a thirteenth embodiment of the present invention.
FIG. 23 is a schematic perspective view showing an anti-submarine bar in a rear seat structure according to a fourteenth embodiment of the present invention.
FIG. 24 is a schematic perspective view showing an anti-submarine bar in a rear seat structure of a rear seat, according to a fifteenth embodiment of the present invention.
FIG. 25 is a schematic perspective view showing an anti-submarine bar in a rear seat structure according to a sixteenth embodiment of the present invention.
FIG. 26 is a schematic perspective view showing an anti-submarine bar in a rear seat structure according to a seventeenth embodiment of the present invention.
FIG. 27 is a side sectional view showing a rear seat structure according to an eighteenth embodiment of the present invention.
FIG. 28 is a side sectional view showing a front seat structure according to a nineteenth embodiment of the present invention.

### DETAILED DESCRIPTION OF THE PREFERRED EMBODIMENTS OF THE INVENTION

A preferred embodiment of the present invention will now be specifically described based on the drawings.

### (FIRST EMBODIMENT)

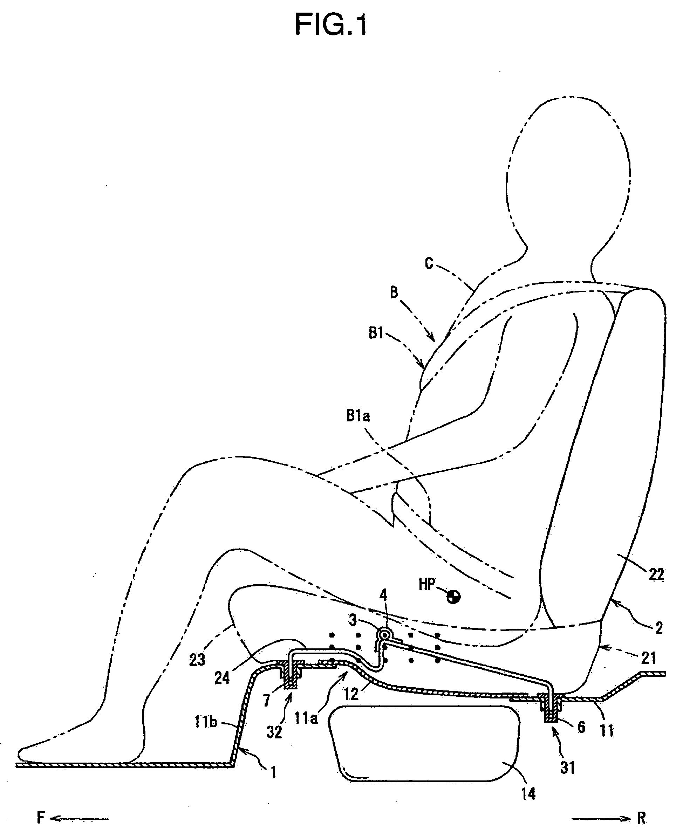

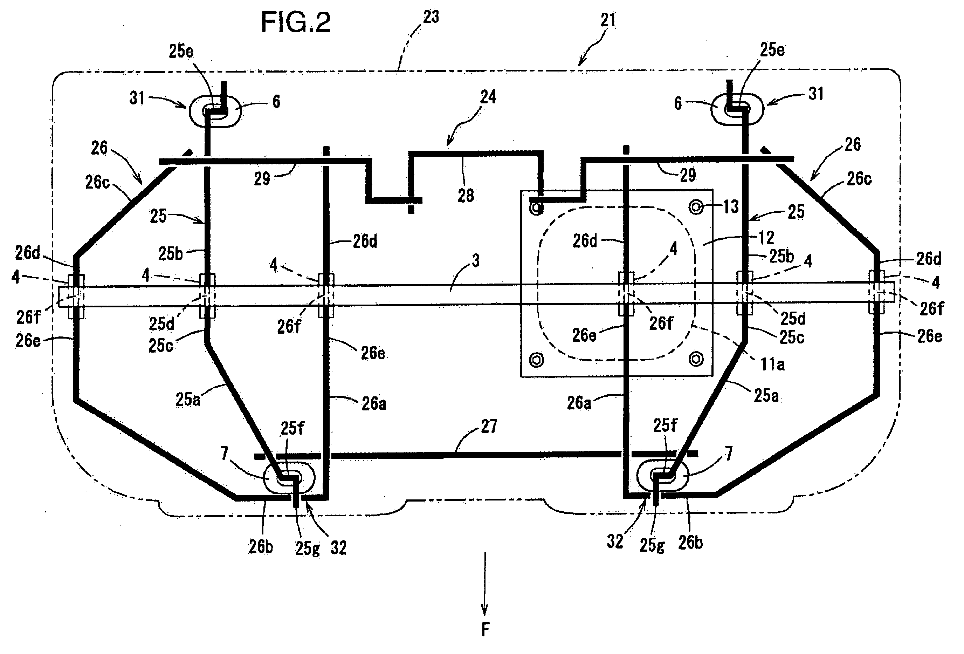

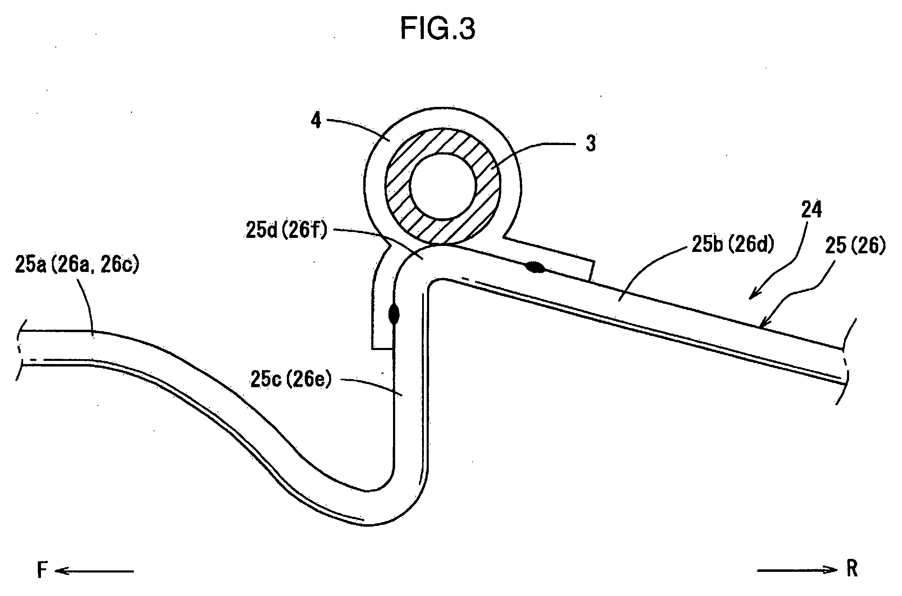

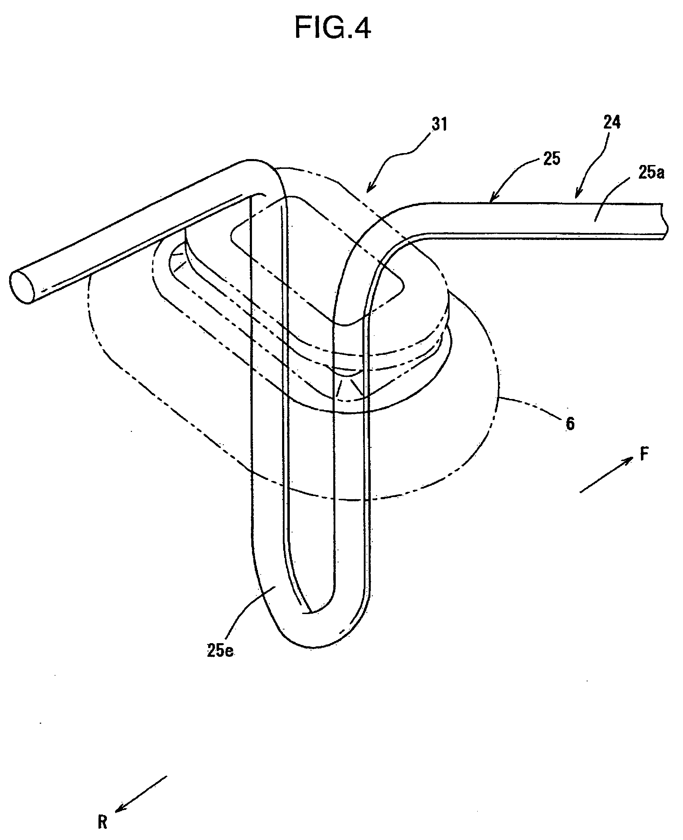

A first embodiment of the present invention illustrated in FIGS. 1 to 6 will be first described. FIG. 1 is a side sectional view showing a seat structure for a rear seat, according to the first embodiment, and FIG. 2 is a transparent, top plan view showing a wire frame and an anti-submarine bar, which are installed inside a seat cushion of the rear seat illustrated in FIG. 1. FIG. 3 is a side view enlargedly showing the anti-submarine bar, and FIG. 4 is a perspective view showing a lock portion of the wire frame and its vicinity. In FIGS. 1 to 4, the arrowed line "F" and the arrowed line "R" indicate a frontward direction of a vehicle body and a rearward direction of the vehicle body, respectively.

A floor panel 1 making up a floor of an occupant compartment of a vehicle body includes a rear floor panel 11 making up a rear floor of the occupant compartment, and a laterally-long bench seat is provided as a rear seat 2 on the rear floor panel 11. The rear seat 2 comprises a seat cushion 21 placed on the rear floor panel 11 (vehicle body) to allow an occupant C to be seated thereon, and a seat back 22 connected to the seat cushion 21 to support the seated occupant C from therebehind. The seat cushion 21 has a structure including a pad 23 made of a foamed resin and shaped to form a seating portion, wherein a wire frame 24 made of a metal material is installed inside the pad 23 to reinforce the seat cushion 21.

The floor panel 1 also includes a front floor panel (not shown) located frontward of the rear floor panel 11 to make up a front floor of the occupant compartment, and a driver seat and a front occupant seat each adapted to adjust a position thereof in a frontward-rearward (i.e., longitudinal) direction of the vehicle body are provided as a front seat on the front floor panel in a side-by-side arrangement along a rightward-leftward (i.e., widthwise or lateral) direction of the vehicle body. In the first embodiment, the following description will be made about only the rear seat 2, and an illustration and detailed description of the front seat will be omitted.

The rear floor panel 11 is provided with a service cover 12 as shown in FIGS. 1 and 2, in a position under and in opposed relation to the seat cushion 21. The service cover 12 is fastened to the rear floor panel 11 by a plurality of bolts 13 (see FIG. 2) in such a manner as to allow an opening 11a formed in the rear floor panel 11 to be covered therewith.

In the first embodiment, a fuel tank 14 is housed in a space below the rear floor panel 11 and in a position corresponding to the opening 11a. The service cover 12 can be detached by unfastening the bolts 13, to access the fuel tank 14 through the opening 11a so as to perform a maintenance operation.

As shown mainly in FIG. 2, in the first embodiment, the wire frame 24 of the seat cushion 21 of the rear seat 2 is comprised of a pair of five first to fifth wires 25 to 29 each having a different shape, which are laterally symmetrically assembled together in a frame configuration. In the first embodiment, the wires are integrally joined to each other by means, for example, of welding, at an intersecting position where they intersect with each other.

The first wire 25 is formed in a shape having a relatively long length, and arranged to extend approximately in the longitudinal direction of the vehicle body in such a manner as to have a rear end belonging to a rear lock portion 31, and a front end belonging to a front lock portion 32, as described in detail later.

The second wire 26 includes: a longitudinally-extending portion 26a formed in a shape having a relatively long length, and arranged laterally inward of the first wire 25 to extend in the longitudinal direction; a laterally-extending portion 26b formed by bending a front end of the longitudinally-extending portion 26a outwardly to have a relatively short length, and arranged to extend in the lateral direction of the vehicle body; and a lateral edge-defining portion 26c formed by bending an outer end of the laterally-extending portion 26b in three stages, arranged to extend to define a lateral edge of the wire frame 24 and then reach a rear end thereof.

The third wire 27 is formed and arranged to extend in the lateral direction in a front region of a central portion of the seat cushion 21, wherein each of opposite ends thereof is arranged to intersect with each of the longitudinally-extending portion 26a of the second wire 26, and the first wire 25, in such a manner as to be joined thereto.

The fourth wire 28 and the fifth wire 29 define a rear edge of the wire frame 24. Specifically, the fourth wire 28 is formed in an angular C shape in top plan view, and arranged in a rear region of the central portion of the seat cushion 21. The fifth wire 29 is formed in a crank-like shape in top plan view, and arranged to intersect with the fourth wire 28, the second wire 26 and the first wire 25, in such a manner as to be joined thereto.

As shown in FIGS. 2 and 3, each of a longitudinally-extending portion 25a of the first wire 25 and the longitudinally-extending portion 26a and the lateral edge-defining portion 26c of the second wire 26 is formed to have an inclined portion (25b, 26d) inclined obliquely upwardly in the frontward direction and an upright portion (25c, 26e) extending vertically downwardly from a front end of the inclined portion (25b, 26d), wherein an elongate-shaped anti-submarine bar 3 is fixed to a top region (25d, 26f) which is a boundary region between the inclined portion (25b, 26d) and the upright portion (25c, 26e).

Further, as shown in FIG. 1, the rear seat 2 is provided with a seat belt apparatus B to restrain the occupant C seated in the rear seat 2. The seat belt apparatus B comprises a seat belt B1 including a lap belt B1a adapted to restrain a lumbar region of the occupant C.

In a state when the lap belt B1a restrains the occupant C, opposite ends of the lap belt B1a are connected to a structural member of the vehicle body located around a rear portion of the seat cushion 21.

The anti-submarine bar 3 (also termed a "frontward-displacement suppressing member") is designed to suppress a frontward displacement of the occupant C to be caused by an inertia force due to impact in the event of a frontal vehicle collision or the like, so as to suppress a so-called submarine phenomenon that the occupant C slips through between the seat cushion 21 and the seat belt B1.

In the first embodiment, a joint bracket 4 formed to be conformable to each of the top regions 25d, 26f of the first and second wires 25, 26 is joined to a vicinity of the top region (25d, 26f) in such a manner as to clamp the anti-submarine bar 3 between the joint bracket 4 and the top region (25d, 26f). Thus, the anti-submarine bar 3 is connected to the wire frame 24 on an upper side of each of the longitudinally-extending portions 25a, 26a of the first and second wires 25, 26 and the lateral edge-defining portion 26c of the second wire 26, while being fixed at an after-mentioned adequate position inside the seat cushion 21.

The seat back 22 is assembled to the rear floor panel 11 through a hinge bracket (not shown), and front and rear end of the seat cushion 21 are fixed to the rear floor panel 11 by the front lock portion 32 and the rear lock portion 31, respectively.

The fixing of the seat cushion 21 will be more specifically described below. As shown in FIG. 4, the first wire 25 of the wire frame 24 has a downwardly-protruding portion 25e provided on a rearmost side thereof in the longitudinal direction of the vehicle body to protrude downwardly from a lower surface of the pad 23. The downwardly-protruding portion 25e is formed by bending a part of the wire frame 24 into a generally U shape in front view, to make up a rear lock portion 31.

The rear end of the seat cushion 21 is fixed to the rear floor panel 11 (vehicle body) using the rear lock portion 31, and a resin clip 6 fixed to a portion of the rear floor panel 11 located under the rear end of the seat cushion 21.

An outer one of two upright elements of the U shape of the downwardly-protruding portion 25e is bent approximately in the frontward direction of the vehicle body to form the longitudinally-extending portion 25a extending approximately in the longitudinal direction of the vehicle body.

The first wire 25 also has a downwardly-protruding portion 25f provided on a frontmost side thereof in the longitudinal direction of the vehicle body to protrude downwardly from the lower surface of the pad 23. The downwardly-protruding portion 25f is formed by bending a part of the wire frame 24 into a generally U shape in front view in the same manner as that in the downwardly-protruding portion 25e, to make up a front lock portion 32 having approximately the same configuration as that of the rear lock portion 31.

The front end of the seat cushion 21 is fixed to the rear floor panel 11 (vehicle body) using the front lock portion 32, and a resin clip 7 fixed to a vicinity of a kick-up portion 11b (see FIG. 1) of the rear floor panel 11.

In the first wire 25, an inner one of two upright elements of the U shape of the downwardly-protruding portion 25f is bent frontwardly to form a front extension portion 25g extending approximately in the frontward direction of the vehicle body. The laterally-extending portion 26b of the second wire 26 is arranged to pass through a position frontward of and adjacent to the downwardly-protruding portion 25f. Specifically, the laterally-extending portion 26b of the second wire 26 and the front extension portion 25g of the first wire 25 are arranged to intersect with each other at a position frontward of and adjacent to the downwardly-protruding portion 25f, and integrally joined to each other at the intersecting position.

The resin clips 7, 6 for attaching the front and rear ends of the seat cushion 21 onto the vehicle body are fitted in respective openings formed in an upper surface of the rear floor panel 11 at a position just rearward of the kick-up portion 11b and a position under a lower end of the seat back 22. The downwardly-protruding portion 25e, 25f of the wire frame 24 protruding from rear and front regions of the lower surface of the resin pad 23 are press-fitted in corresponding ones of the resin clips 6, 7, under the lower surface of the resin pad 23.

In this manner, a frontward displacement of the wire frame 24 is restricted to allow a position of the anti-submarine bar 3 within the seat cushion 21 to be substantially fixed in the event of a frontal vehicle collision or the like. As used herein, the anti-submarine bar 3 adapted to suppress a frontward displacement of the seat cushion 21 or an occupant seated on the seat cushion 21 during a frontal vehicle collision may be termed a "frontward-displacement suppressing member", and one or more members adapted to restrict a frontward displacement of the anti-submarine bar 3 (frontward-displacement suppressing member), such as the wire frame 24 and a member for joining the wire frame 24 to the rear floor panel 11, may be collectively termed a "displacement-restricting member".

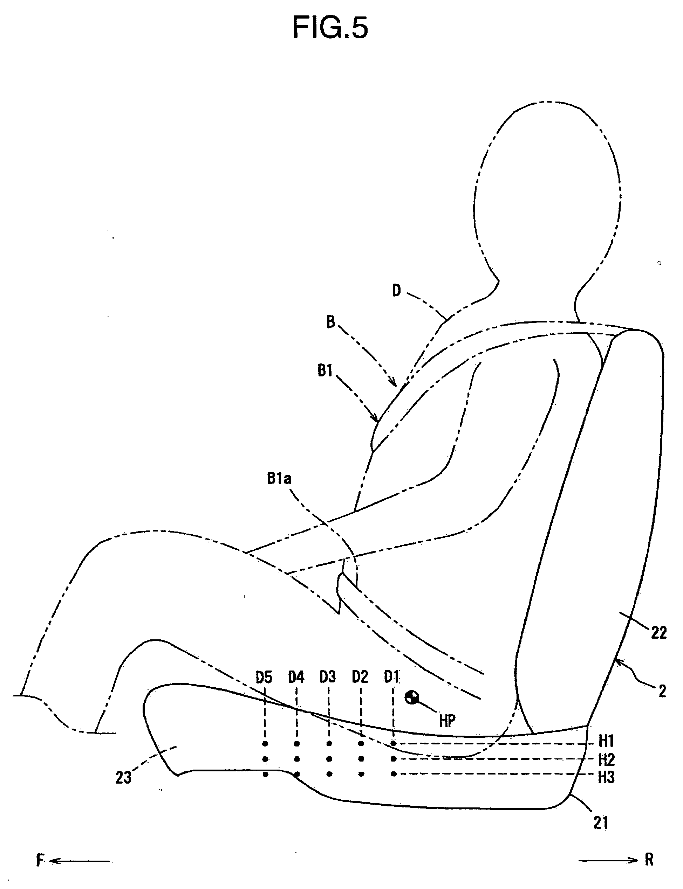

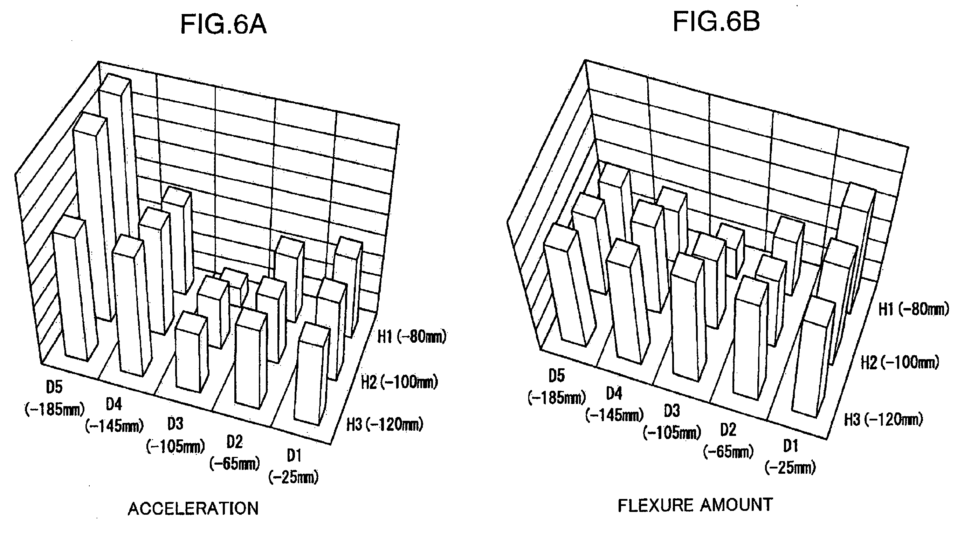

FIG. 5 is a side view showing a state when a dummy D seated in the rear seat 2 is restrained by the seat belt apparatus B, and an installation point of the anti-submarine bar 3 in a measurement test on shock during a frontal vehicle collision. FIGS. 6A and 6B are graphs showing results obtained by measuring an injury value when a shock is applied to a chest-equivalent region of the dummy D due to constriction by the seat belt B1, wherein FIG. 6A is a graph showing a measurement result of shock acceleration, and FIG. 6B is a graph showing a measurement result of flexure amount in the chest-equivalent region of the dummy D.

FIG. 5 shows a dummy D simulating an occupant C who is an adult having a standard body size, and the point HP in FIG. 5 indicates a hip point which is an intermediate position between right and left femoral heads of the occupant C seated on the seat cushion 2.

The inventor of this application carried out a test under a condition that the dummy D as a substitute for the occupant C is seated in the rear seat 2, and an impact during a frontal vehicle collision is applied to the dummy D seated while being restrained by the seat belt B1. Then, a shock applied to a region equivalent to a chest of the occupant C (hereinafter referred to as "chest-equivalent region") due to constriction of the seat belt B1 during application of the impact was measured, and an injury value of the chest of the occupant C was estimated based on the measurement result. Further, in the measurement test illustrated in FIGS. 5 and 6, a position of the anti-submarine bar 3 in the seat cushion 21 was variously changed to analyze a change in shock applied to the chest-equivalent region of the dummy D, i.e., a change in injury value of the chest of the occupant C.

In FIG. 5, an installation point of the anti-submarine bar 3 in the measurement test is indicated by a black point. Specifically, the installation point of the anti-submarine bar 3 was set at positions spaced apart from the hip point HP in the longitudinal direction of the vehicle body by given distances D1 to D5 (D1: 25 mm, D2: 65 mm, D3: 105 mm, D4: 145 mm, D5: 185 mm (from the hip point HP)), and located below the hip point HP by given distances H1 to H3 (H1: 80 mm, H2: 100 mm, H3: 120 (from the hip point HP)). That is, the measurement test illustrated in FIGS. 5 and 6 was carried out by setting the installation point of the anti-submarine bar 3 at total 15 positions.

Further, in the measurement test, an appropriate sensor device was attached onto the chest-equivalent region of the dummy D to measure a shock acceleration applied to the chest-equivalent region of the dummy D and a flexure amount in the chest-equivalent region, due to constriction by the seat belt B1 during a frontal vehicle collision, and the measurement result was used as a criterion for determining the injury value.

In FIGS. 6A and 6B, each of the shock acceleration and the flexure amount has a low value when the anti-submarine bar 3 is installed around the installation point having the distance D3-H1 (the position spaced part from the hip pint HP in the frontward direction by 105 mm and located below the hip point by 80 mm).

Through various researches and based on the measurement results illustrated in FIGS. 6A and 6B, the inventor found that a positional relationship between the anti-submarine bar 3 and the hip point HP of the occupant C is critical in order to reliably suppress a frontward displacement of the occupant C by the anti-submarine bar 3 and reliably absorb shock caused by the frontward displacement. The inventor also found that, when the anti-submarine bar 3 is installed inside the seat cushion 21 at a position falling within a range spaced apart from the hip point HP in the frontward direction of the vehicle body by a distance of zero to 160 mm, an occupant's frontward displacement-suppressing effect, and a shock-absorbing effect (injury-value reducing effect), are effectively brought out.

Further, the inventor found that the above effects can be more effectively brought out by setting the anti-submarine bar 3 at a position falling within the above range and lying below the hip point HP by a distance of 20 to 100 mm.

Particularly, according to the measurement result illustrated in FIGS. 6A and 6B, it is optimal to install the anti-submarine bar 3 at a position spaced apart from the hip point HP in the frontward direction of the vehicle body by a distance of 25 to 150 mm, more preferably 80 to 120 mm, and located below the hip point HP by a distance of 40 to 80 mm, more preferably 60 to 70 mm.

Based on the above measurement results, in the first embodiment illustrated in FIGS. 1 to 4, the anti-submarine bar 3 is installed at an adequate position falling within the above positional range, and, specifically, installed at a position where the lowest value is obtained in each of the measurement tests, i.e., at the installation point spaced apart from the hip point HP in the frontward direction of the vehicle body by the distance D3 and located below the hip point H1 by the distance H1.

Thus, in the first embodiment, in the event of a frontal vehicle collision, a frontward displacement of the occupant C can be suppressed by the anti-submarine bar 3 installed at the adequate position, so that the anti-submarine bar 3 can effectively bring out the occupant's frontward displacement-suppressing effect and the shock-absorbing effect so as to reduce an injury value of the occupant C due to the constriction by the seat belt B1.

Further, the pad 23 of the seat cushion 21 is interposed between the anti-submarine bar 3 and the seated occupant C. Thus, an instantaneous shock to be applied to the lumbar region of the occupant C can be absorbed by the pad 23.

In the first embodiment, means for suppressing a frontward displacement of the occupant C is made up of the anti-submarine bar 3. This makes it possible to effectively suppress the submarine phenomenon that a lower body of the occupant C restrained by the seat belt B1 is displaced frontwardly by a inertia force while slipping through between the seat cushion 21 and the seat belt B 1.

Further, the anti-submarine bar 3 is fixed to the wire frame 24 (see FIGS. 1 to 4), as mentioned above. Thus, in the event of a frontal vehicle collision, a frontward displacement of the occupant C can be suppressed by the anti-submarine bar 3, while allowing a frontward displacement of the anti-submarine bar 3 due to a load imposed from the occupant C to be restricted by the wire frame 24. This makes it possible to more reliably suppress the frontward displacement of the occupant C by cooperation between the anti-submarine bar 3 and the wire frame 24, so as to further reduce the injury value of the occupant C due to the constriction by the seat belt B 1.

In addition, based on the structure where the anti-submarine bar 3 is fixed to the wire frame 24, the seat cushion 21 can be kept from being displaced frontwardly during a frontal vehicle collision. This makes it possible to prevent a lower body of the occupant C from being displaced frontwardly together with the seat cushion 21, so as to allow the anti-submarine bar 3 to sufficiently bring out the injury value-reducing effect.

Further, the anti-submarine bar 3 is installed inside the seat cushion 21. This provides an additional advantage of being able to readily perform an operation of mounting the seat cushion 21 onto the floor panel 1, without regard to the presence of the anti-submarine bar 3.

Furthermore, the anti-submarine bar 3 can be used to serve as a seat cushion-reinforcing member extending in the lateral direction of the vehicle body. In this case, rigidity of the seat cushion 21 can be improved in cooperation with the wire frame 24.

The anti-submarine bar 3 is fixed to the wire frame 24 serving as a seat cushion-reinforcing member for reinforcing the seat cushion 21. Thus, there is no need to additionally provide a support member for allowing the anti-submarine bar 3 to be fixed thereto. In addition, anti-submarine bar 3 fixed to the seat cushion-reinforcing member can bring out an enhanced occupant's frontward displacement-suppressing effect.

In the first embodiment, the wire frame 24 is fixed to the rear floor panel 11 (vehicle body) through the front and rear lock portions 32, 31 thereof. This makes it possible to more reliably prevent the respective frontward displacements of the anti-submarine bar 3 and the occupant C and more reliably suppress the frontward displacement of the seat cushion 21.

In the first embodiment, as shown in FIGS. 1 and 2, each of the first and second wires 25, 26 is configured to extend frontwardly while being fixed to the rear floor panel 11 at least at a position on a rear side of the seat cushion 21 through the rear lock portion 31, and the anti-submarine bar 3 is fixed to an upper surface of each of the first and second wires 25, 26 at the adequate position. Thus, even if a load is applied to the wire frame 24 and the anti-submarine bar 3 during a frontal vehicle collision or the like, a frontward displacement of each of the wire frame 24 and the anti-submarine bar 3 can be more reliably suppressed by the rear lock portion 31.

In the first embodiment, the anti-submarine bar 3 is arranged in the seat cushion 21. Thus, in the structure where the service cover 12 is disposed under the seat cushion 21 to allow for maintenance of the fuel tank 14 as in the first embodiment, the above arrangement makes it possible to readily access the service cover 12 by demounting only the seat cushion 21, so as to facilitate a maintenance operation for the fuel tank 14.

### (SECOND EMBODIMENT)

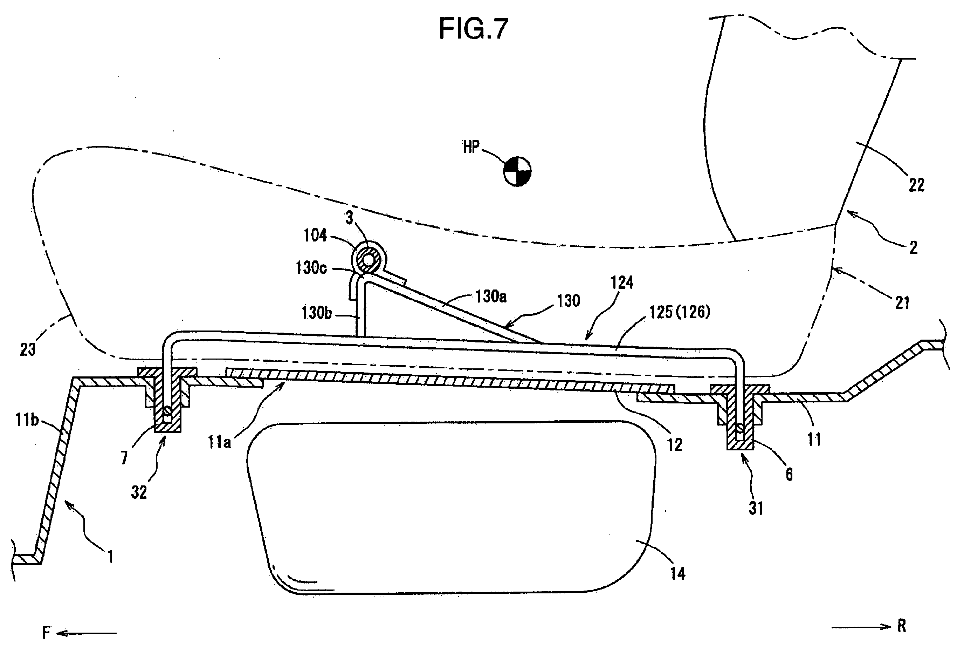

Although the wire frame 24 in the first embodiment illustrated in FIGS. 1 to 6B is configured such that the inclined portion (25b, 26d) and the upright portion (25c, 26e) are formed as a longitudinally intermediate portion of each of the first and second wires 25, 26, the present invention is not limited thereto. For example, as illustrated in FIG. 7 which shows a vehicle seat structure according to a second embodiment of the present invention, a wire frame 124 may be employed which comprises first and second wires 125, 126 each formed and arranged to linearly extend in a longitudinal direction of a vehicle body, and a sixth wire 130 separately prepared from the first and second wires 125, 126 is attached onto a longitudinally intermediate portion of each of the first and second wires 125, 126, wherein an anti-submarine bar 3 is fixed onto the sixth wire 130.

More specifically, the sixth wire 130 has an inclined portion 130a and an upright portion 130b which correspond, respectively, to the inclined portion (25b, 26d) and the upright portion (25c, 26e) of each of the first and second wires 25, 26, wherein front and rear ends of the sixth wire 130 are joined to each of the first and second wires 125, 126 by means, for example, of welding.

Further, a boundary region between the inclined portion 130a and the upright portion 130b of the sixth wire 130 are formed as a top region 130c, and a joint bracket 104 formed to be conformable to the top region 130c is joined to a vicinity of the top region 103c, so that the anti-submarine bar 3 is fixed to the wire frame 124 in the top region 130c, while being set at the aforementioned adequate position inside a seat cushion 21.

As above, in each of the first and second embodiments, each of the first and second wires (25, 130, etc.) is provided with the inclined portion (25b, 130a, etc.) and the upright portion (25c, 130b, etc.), and the anti-submarine bar 3 is fixed at the adequate position by use of the inclined portion (25b, 130a, etc.) and the upright portion (25c, 130b, etc.). As compared with a structure where the anti-submarine bar 3 is fixed by use of only the inclined portion or only the upright portion, the above structure makes it possible to improve rigidity against a longitudinal load so as to more reliably suppress the frontward displacement of the anti-submarine bar 3.

In the first and second embodiments, the anti-submarine bar 3 is fixed to the wire frame (24, 124) using the joint bracket (4, 104). Alternatively, the anti-submarine bar 3 and the wire frame (24, 124) may be directly fastened together by means, for example, of welding.

Further, in the case where the anti-submarine bar 3 is fixed to a seat cushion-reinforcing member for reinforcing the seat cushion 21, the seat cushion-reinforcing member is not limited to the wire frame (24, etc.). For example, the seat cushion-reinforcing member may be a seat frame or a seat pan.

Although the first and second embodiments show one example where the bench-type rear seat 2 is provided with the single elongate-shaped anti-submarine bar 3 extending approximately linearly in the lateral direction of the vehicle body, the present invention is not limited thereto, but the rear seat 2 may be provided with a plurality of anti-submarine bars for respective seating zones thereof.

### (THIRD EMBODIMENT)

Although the first and second embodiments show one example where the bench-type rear seat 2 is provided with the single elongate-shaped anti-submarine bar 3 extending approximately linearly in the lateral direction of the vehicle body, the present invention is not limited thereto, but the bench-type rear seat 2 may be provided with a plurality of anti-submarine bars for respective seating zones thereof.

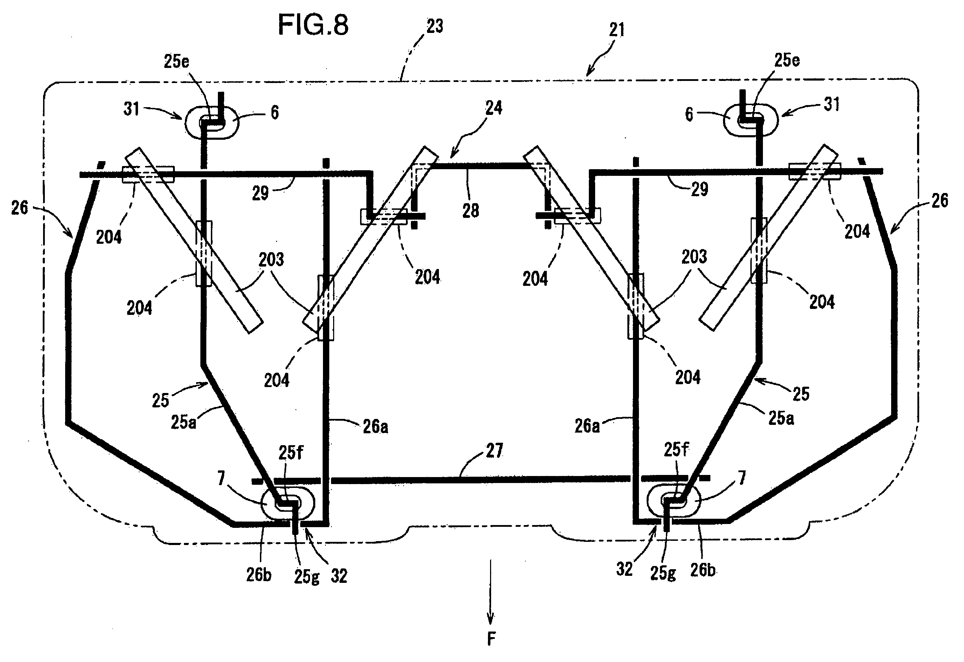

In this case, the anti-submarine bars may be arranged to be approximately linearly aligned with each other in a lateral direction of a vehicle body. Alternatively, as illustrated in FIG 8 which shows a vehicle seat structure according to a third embodiment of the present invention, a pair of anti-submarine bars 203 may be provided in each of right and left seating zones of the rear seat 2, and arranged side-by-side in the lateral direction of the vehicle body in such a manner that a distance therebetween is gradually reduced in top plan view in a frontward direction of the vehicle body.

In FIG 8, the pair of anti-submarine bars 203 are arranged to form a generally V shape in top plan view, and each of the anti-submarine bars 203 is firmly fixed to the wire frame 24 at a plurality of positions thereof by respective ones of a plurality of joint brackets 204.

As above, the pair of anti-submarine bars 203 are arranged side-by-side in the lateral direction of the vehicle body in such a manner that a distance therebetween is gradually reduced in top plan view in the frontward direction of the vehicle body. Thus, in the event of a frontal vehicle collision, a frontward displacement of a lumbar region of an occupant C seated in the rear seat 2 can be reliably stopped by front ends of the pair of anti-submarine bars 203 arranged with a narrowed distance therebetween. Further, in the third embodiment, a position of the lumbar region of the occupant C in the lateral direction of the vehicle body can be restricted to allow the lumbar region to be reliably guided toward the front ends of the anti-submarine bars 203 arranged with a narrowed distance therebetween.

### (FOURTH EMBODIMENT)

Although the vehicle seat structure according each of the first to third embodiments is configured such that the anti-submarine bar (3, 203) is fixed at the adequate position by use of the seat cushion-reinforcing member (wire frame 24, etc.), the present invention is not limited thereto, but any other suitable configuration may be employed which is capable of, when a frontward displacement of an occupant C seated on a rear seat 2 is initiated in the event of a frontal vehicle collision, restricting a frontward displacement of the anti-submarine bar to allow the anti-submarine bar to be fixed substantially at the adequate position.

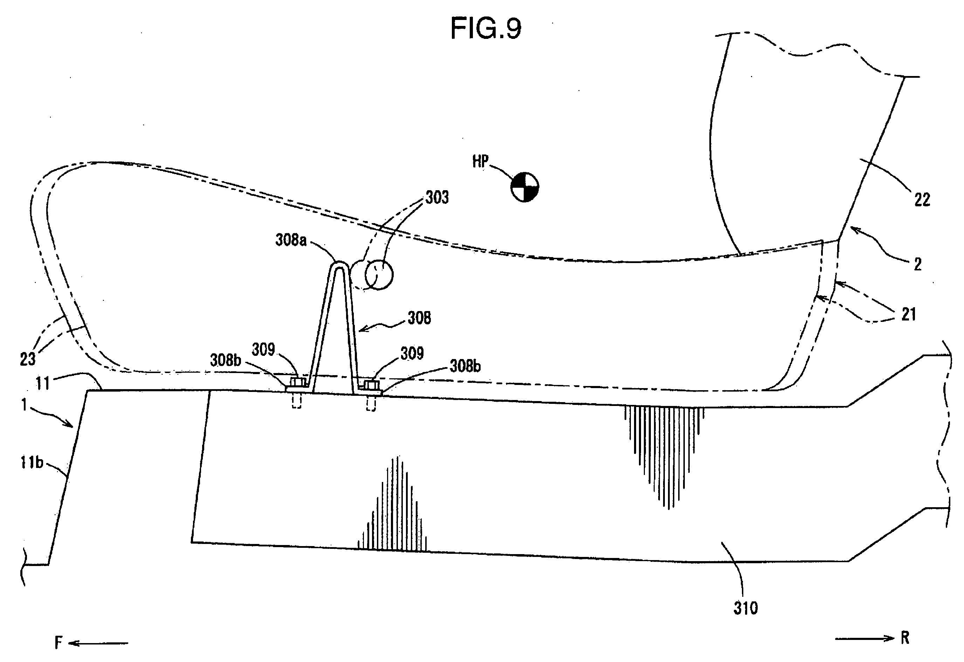

Specifically, as shown in FIG. 9, a vehicle seat structure according to the fourth embodiment is configured such that an anti-submarine bar 303 is simply fixed inside a seat cushion 21, and a protruding member 308 prepared separately from the anti-submarine bar 303 is arranged at a position frontward of the anti-submarine bar 303 in a longitudinal direction of the vehicle body.

In the fourth embodiment, when a frontward displacement of the seat cushion 21 is initiated in the event of a frontal vehicle collision, the anti-submarine bar 303 is brought into contact with the protruding member 308 as indicated by the two-dot chain line in FIG. 9, so that respective frontward displacements of the seat cushion 21 and the anti-submarine bar 303 are stopped.

The protruding member 308 has an intermediate portion formed as a chevron-shaped portion 308a protruding upwardly from a rear floor panel 11. The protruding member 308 is arranged such that an upper end of the chevron-shaped portion 308a is located inside the seat cushion 21 and frontward the anti-submarine bar 303. Further, the anti-submarine bar 303 is installed inside the seat cushion 21 in such a manner as to be set at the adequate position when it is brought into contact with the chevron-shaped portion 308a of the protruding member 308.

The chevron-shaped portion 308a of the protruding member 308 is formed to extend in a lateral direction of a vehicle body, for example, with a hat-like shape in vertical section, as shown in FIG. 9. The protruding member 308 further has a pair of flat-shaped base portions 308b formed at respective ones of front and rear ends of the chevron-shaped portion 308a. The protruding member 308 (serving as the displacement-restricting member) is fixed to the vehicle body in such a manner that each of the base portions 308b thereof is fastened to a pair of side frames 310 extending in a longitudinal direction of the vehicle body along respective ones of opposite lateral edges of the vehicle body, by bolts 309. Each of the side frames 310 is a frame member disposed along the lateral edge of the vehicle body to serve as a vehicle body-reinforcing member for reinforcing the vehicle body.

In the fourth embodiment, in the event of a frontal vehicle collision, the anti-submarines bar 303 is brought into contact with the protruding member 308, so that a frontward displacement of the seat cushion 21 can be suppressed and consequently a frontward displacement of the occupant C can be suppressed. In addition, the displacement- restricting member for restricting a frontward displacement of the anti-submarines bar 303 (the protruding member 308) is provided to the vehicle body, instead of providing to the seat cushion 21. This makes it possible to facilitate structural simplification of the rear seat 2.

Further, the protruding member 308 is fixed to the side frames 310 serving as the vehicle body-reinforcing member. This makes it possible to reliably suppress a frontward displacement of the protruding member 308 and consequently more reliably suppress the respective frontward displacements of the seat cushion 21 and the occupant C.

The vehicle body-reinforcing member for allowing the protruding member 308 to be fastened thereto is not limited to the side frames 310, but may be a cross member extending in the lateral direction of the vehicle body.

### (FIFTH EMBODIMENT)

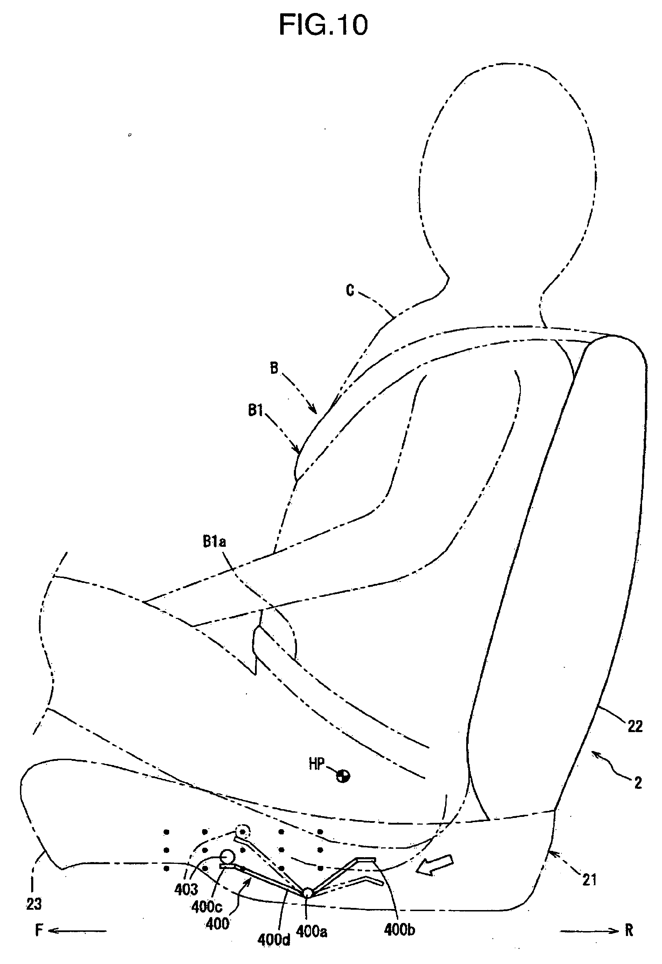

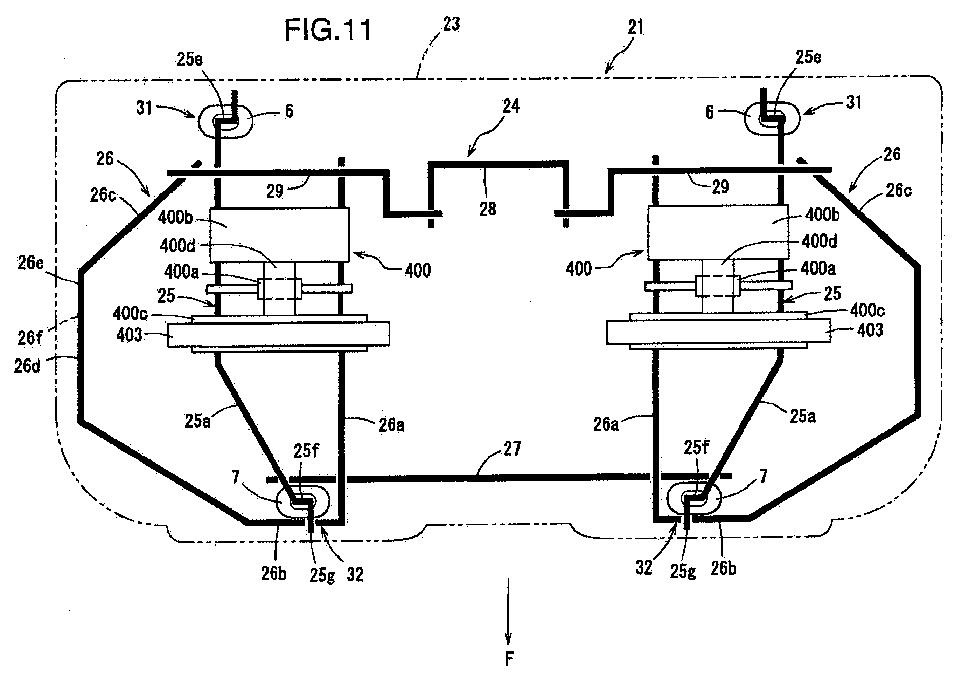

As shown in FIGS. 10 and 11, a vehicle seat structure according to a fifth embodiment comprises an anti-submarine bar 403 movably held inside the seat cushion 21, and a bar-moving mechanism 400 which is adapted, when a frontward displacement of an occupant C seated in a rear seat 2 is initiated in the event of a frontal vehicle collision or the like, to move the anti-submarine bar 403 to the adequate position.

The bar-moving mechanism 400 installed inside a seat cushion 21 primarily comprises: a pivot shaft 400a arranged to extend in a lateral direction of a vehicle body and fixed to a wire frame 24 (first and second wires 25, 26); a displacement-sensing lever portion 400b located rearward of the pivot shaft 400a and swingably supported by the pivot shaft 400a; a bar-lifting actuator portion 400c located frontward of the pivot shaft 400a and swingably supported by the pivot shaft 400a; and a link member 400d connecting the bar-lifting actuator portion 400c to the displacement-sensing lever portion 400b.

In the fifth embodiment, in a normal state, the anti-submarine bar 403 is located below the adequate position. Further, in the bar-moving mechanism 400, the displacement-sensing lever portion 400b is located below a hip point HP of the occupant C, and a free end of the bar-lifting actuator portion 400c is located immediately below the anti-submarine bar 403.

When a frontward displacement of the occupant C is initiated in the event of a frontal vehicle collision or the like, a hip of the occupant C is displaced obliquely downwardly and frontwardly, as indicated by the outline arrow in FIG. 10. In response to this displacement, the displacement-sensing lever portion 400b is pushed downwardly by a load of the hip of the occupant C, and swingingly moved in a clockwise direction, as indicated by the two-dot chain line in FIG. 10.

Thus, in conjunction with the swing movement of the displacement-sensing lever portion 400b, the bar-lifting actuator portion 400c located on an opposite side of the displacement-sensing lever portion 400b is swingingly moved in the clockwise direction, as indicated by the two-dot chain line in FIG. 10. In this manner, the bar-lifting actuator portion 400c can push the anti-submarine bar 403 upwardly by the free end thereof.

In this state, a position of the anti-submarine bar 403 lifted by the bar-lifting actuator portion 400c is fixed by a load of the occupant C, and a frontward displacement of the anti-submarine bar 403 is reliably restricted, because the pivot shaft 400a is fixed to the wire frame 24, so that the anti-submarine bar 403 is fixed inside the seat cushion 21 and substantially at the adequate position.

As above, in the fifth embodiment, in the normal state, the anti-submarine bar 404 is installed inside the seat cushion 21 and below the adequate position. This makes it possible to keep the seated occupant C from feeling irregularities in a seating surface so as to prevent deterioration in seating comfort.

In the event of a frontal vehicle collision or the like, in conjunction with sensing of a frontward displacement of the occupant C by the displacement-sensing lever portion 400b, the bar-lifting actuator portion 400c can move the anti-submarine bar 403 upwardly to the adequate position. Thus, despite a simple mechanism, a frontward displacement of the occupant C can be reliably suppressed so as to reduce an injury value due to constriction by a seat belt B1.

Although the vehicle seat structure according to the fifth embodiment is configured to swingably move the bar-lifting actuator portion 400c based on a load caused by a frontward displacement of the occupant C so as to move the anti-submarine bar 403 upwardly, the present invention is not limited thereto. For example, a sensor, such as a pressure sensor, may be provided inside the seat cushion 21 to sense a frontward displacement of the occupant C based on a change in pressure value of the sensor. In this case, the anti-submarine bar 403 may be moved, for example, by electronically controlling a given actuator.

### (SIXTH EMBODIMENT)

Recent years, there has been increasingly developed a seat belt pretensioner which is designed, under a given condition that a certain vehicle deceleration is detected, for example, in the event of a frontal vehicle collision or when a frontal vehicle collision is predicted, to be driven in a direction for tightening a seat belt B1, using a spring force, an explosive force or the like, so as to give a tensioning force to the seat belt B1.

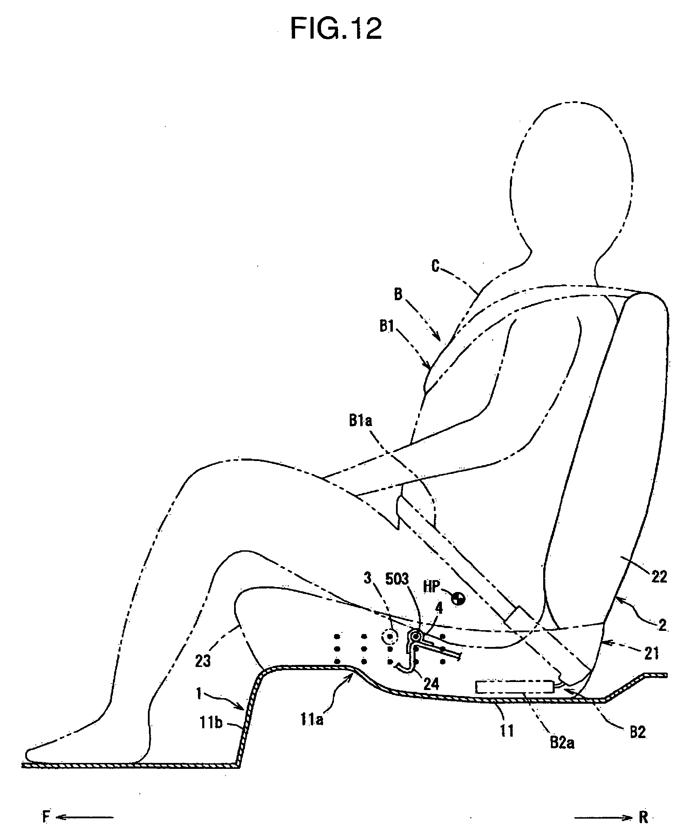

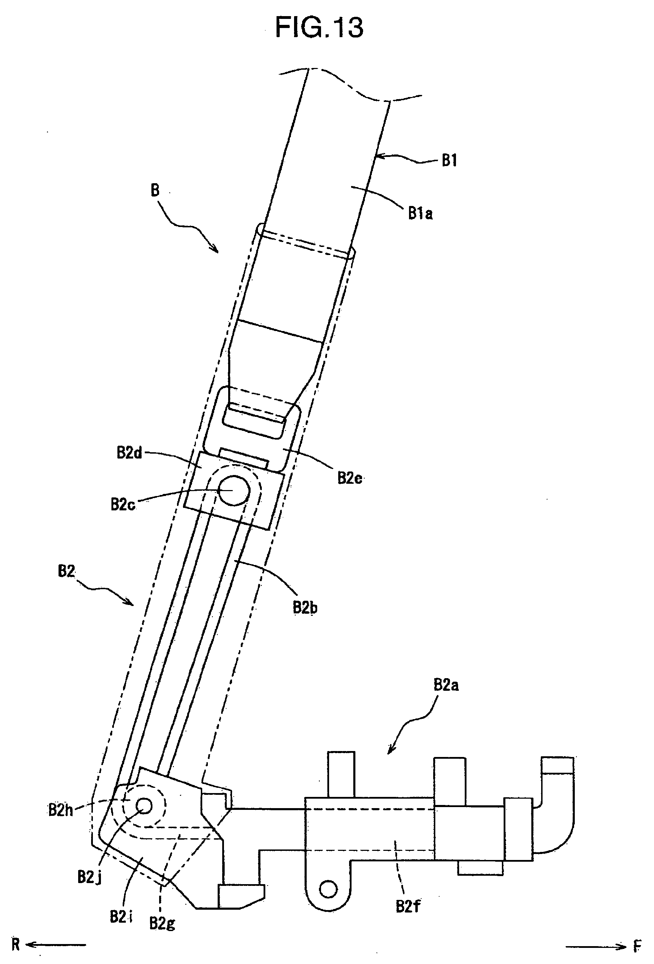

The seat belt pretensioner includes a lap pretensioner B2 adapted to be joined to one end of a lap belt B1a, and driven in a direction for tightening a lap belt B1a of a seat belt apparatus B, under the above condition, as shown in FIGS. 12 and 13.

In a vehicle seat structure according to a sixth embodiment of the present invention illustrated in FIG. 12, an inflator (not shown) of the lap pretensioner B2 is connected to a structural member of a vehicle body, and, under a condition that the lap belt B1a restrains an occupant C seated in a rear seat 2, one end of the lap belt B1a coupled to the lap pretensioner B2 is connected to the structural member of the vehicle body through the lap pretensioner B2 (inflator). Thus, in the sixth embodiment, the lap belt B1a is configured such that opposite ends thereof are connected to a structural member of the vehicle body around a rear end of a seat cushion 21.

In the above lap pretensioner B2, a pretensioner body B2a adapted, when a vehicle deceleration becomes greater than a threshold value, to generate a tensioning force in response to the deceleration, is disposed on a lateral side of the rear end of the seat cushion 21, as shown in FIG. 12, and, and an upper pin B2c is connected to the pretensioner body B2a through a wire B2b, as shown in FIG. 13.

Under a condition that one end of the lap belt B1a is joined to a seat belt connection portion B2e coupled to a wire connection portion B2d having the pin B2c, the wire B2b is pulled by a pulling force of the pretensioner body B2a to pull in the lap belt B1a through the wire connection portion B2d and the seat belt connection portion B2e.

The pretensioner body B2a is equipped with a gas generator (not shown) adapted to generate a large volume of gas when the vehicle deceleration becomes greater than the threshold value, and provided with: a cylinder B2f adapted to receive therein the gas generated by the gas generator; a piston (not shown) adapted to be moved by the gas flowing into the cylinder B2f; a pulley B2h wound by a pull-in wire B2g attached to the piston and connected with a distal end of the pull-in wire B2g; and a bolt B2j rotatably supporting the pulley B2h relative to a casing B2i.

In the vehicle seat structure having the lap pretensioner B2 adapted, in the event of a frontal vehicle collision or when a frontal vehicle collision is predicted, to tighten the seat belt B1, a frontward displacement of the occupant C during a frontal vehicle collision or the like will be suppressed by the seat belt B1 (particularly by the lap belt B1a).

Thus, in the sixth embodiment, as shown in FIG. 12, a position of an anti-submarine bar 503 is set at a relatively rearward position closer to a hip point HP of the occupant C than the adequate position for the vehicle seat structure devoid of the lap pretensioner B2 (i.e., than a position of the anti-submarine bar 3 indicated by the two-dot chain line in FIG. 12). Specifically, the anti-submarine bar 503 is installed inside the seat cushion 12 and at an adequate position falling within a positional range spaced apart from the hip point HP in a frontward direction of the vehicle body by a distance of zero to 100 mm. In FIG. 12, the anti-submarine bar 503 is installed at an installation position spaced apart from the hip point HP in the frontward direction of the vehicle body by a distance D2 (65 mm).

A position of the anti-submarine bar 503 in an upward-downward direction is set in approximately the same manner as that in the vehicle seat structure devoid of the lap pretensioner B2.

As above, in the vehicle seat structure having the seat belt apparatus B equipped with the lap pretensioner B2, the anti-submarine bar 503 is installed in the positional range spaced apart from the hip point HP in the frontward direction of the vehicle body by a distance of zero to 100 mm. This makes it possible to allow the anti-submarine bar 503 to effectively bring out an injury value-reducing effect.

### (SEVENTH EMBODIMENT)

The mechanism for moving the anti-submarine bar upwardly in conjunction with sensing of a frontward displacement of the occupant C, as shown in the fifth embodiment, may be applied to the vehicle seat structure having the seat belt apparatus B equipped with the lap pretensioner B2.

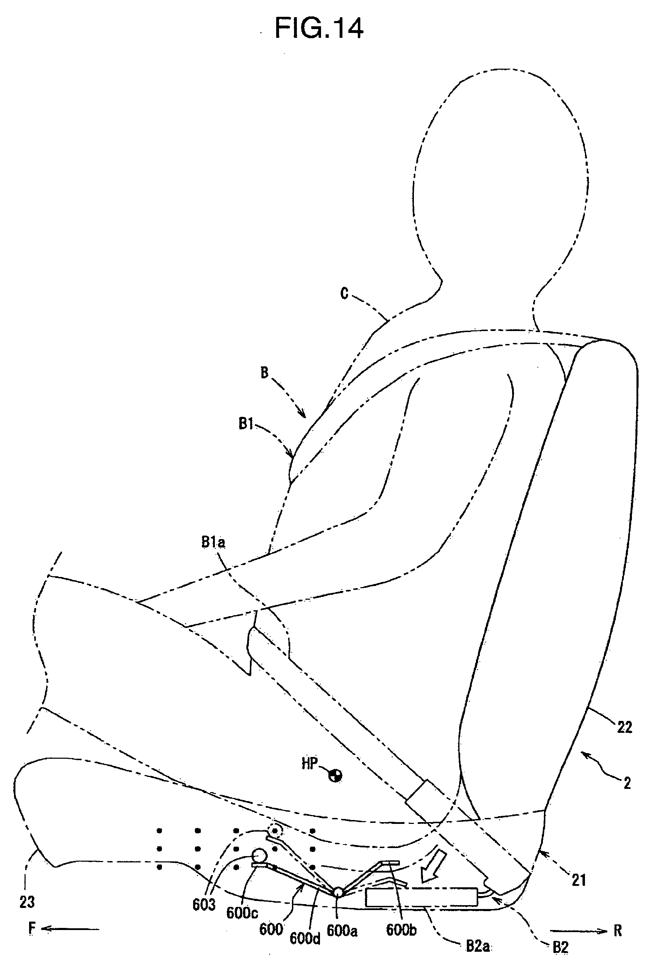

FIG. 14 shows a vehicle seat structure according to a seventh embodiment of the present invention, which has the seat belt apparatus B equipped with the lap pretensioner B2, and comprises a bar-moving mechanism 600 and an anti-submarine bar 603 corresponding, respectively, to the bar-moving mechanism 400 and the anti-submarine bar 403 in the fifth embodiment.

In the seventh embodiment, the bar-moving mechanism 600 comprises a pivot shaft 600a, a displacement-sensing lever portion 600b, a bar-lifting actuator portion 600c, and a link member 600d, which correspond, respectively, to the pivot shaft 400a, the displacement-sensing lever portion 400b, the bar-lifting actuator portion 400c, and the link member 400d, in the bar-moving mechanism 400. A function of the bar-moving mechanism 600 is approximately the same as that of the bar-moving mechanism 400.

Differently from the fifth embodiment, in the seventh embodiment, in the event of a frontal vehicle collision, a frontward displacement of a occupant C seated in a rear seat 2 is suppressed by the lap pretensioner B2, and a distance of a frontward displacement of a hip of the occupant C is reduced as indicated by the outline arrow in FIG 14. Thus, in order to reliably sense a frontward displacement of the occupant C, the displacement-sensing lever portion 400b is set at a position shifted in the rearward direction as compared with that in the fifth embodiment.

Further, the adequate position is shifted in the rearward direction as compared with that in the fifth embodiment. Thus, respective positions of the anti-submarine bar 603 and the bar-lifting actuator portion 600c are also shifted in the rearward direction as compared with those in the fifth embodiment.

For the above reason, in the seventh embodiment, each of the bar-moving mechanism 600 and the anti-submarine bar 603 is set at a relatively rearward position as compared with that in the fifth embodiment. Thus, even in a situation where a frontward displacement of the occupant C is suppressed by the lap pretensioner B2, each of the bar-moving mechanism 600 and the anti-submarine bar 603 can adequately function.

### (EIGHTH EMBODIMENT)

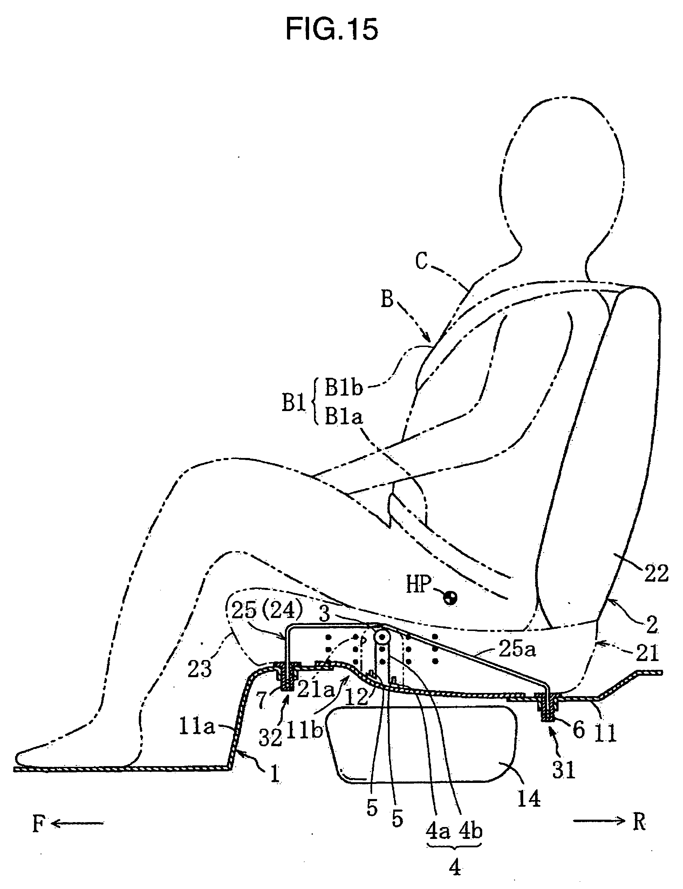

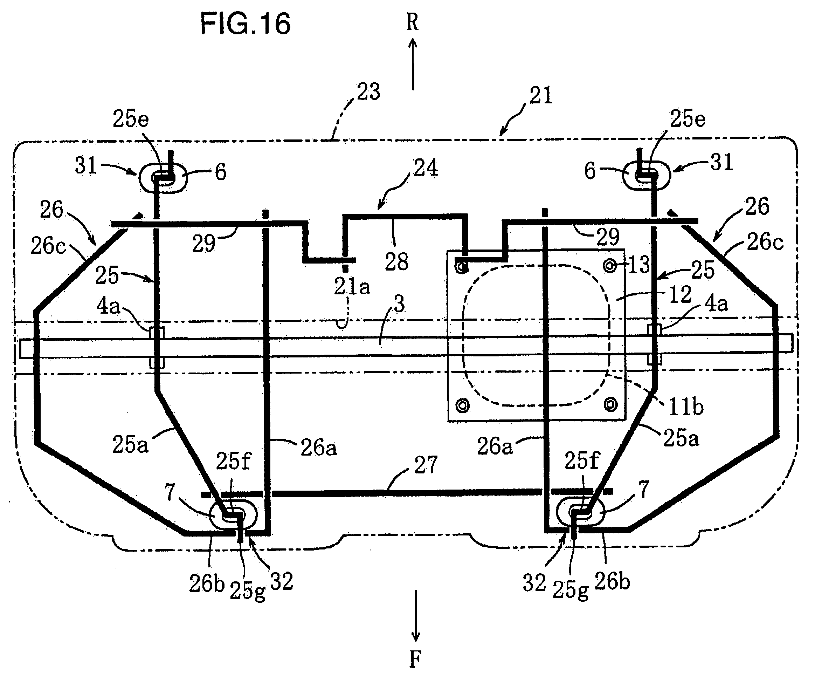

In a vehicle seat structure according to an eighth embodiment of the present invention, as shown in FIGS. 15 and 16, a rear floor panel 11 is provided with a service hole cover 12 in a position under a left portion of a seat cushion 21. The service hole cover 12 is fastened to the rear floor panel 11 by a plurality of bolts 13 in such a manner as to allow a service hole 11b formed in the rear floor panel 11 to be covered therewith. A fuel tank 14 is housed in a space below the rear floor panel 11 and in a position corresponding to the service hole 11b. The service hole cover 12 can be detached by unfastening the bolts 13, to access the fuel tank 14 through the service hole 11b so as to perform a maintenance operation.

A feature of the vehicle seat structure according to the eighth embodiment will be specifically described.

The seat cushion 21 (cushion pad 23) has a concave portion 21a formed in a longitudinally approximately central region of the lower surface thereof to extend in a lateral direction of a vehicle body. The concave portion 21a is formed to extend over an approximately entire region of the seat cushion 21 in the lateral direction of the vehicle body.

An anti-submarine bar 3 is mounted above and supported relative to the rear floor panel 11 through a pair of right and left leg members (mounting members) 4. The anti-submarine bar 3 is arranged to extend over an approximately entire region of the seat cushion 21 in the lateral direction of the vehicle body, without contact with an inner surface of the concave portion 21a. Each of the leg members 4 has a rectangular plate-shaped base portion 4a, and a rod-shaped leg body 4b arranged to extend upwardly from the base portion 4a. The base portion 4a of each of the leg members 4 is fixedly fastened to a corresponding one of right and left ends of an upper surface of the rear floor panel 11 (right and left ends of the vehicle body: in the eighth embodiment, right and left regions corresponding to right and left first wires 25) by bolts 5, and each of right and left ends of the anti-submarine bar 3 is weldingly fixed to a top of a corresponding one of the leg bodies 4b. In this manner, the anti-submarine bar 3 is set at the adequate position, as described in more detail later.

A function/effect of the anti-submarine bar 3 will be described below. The following description will be made on an assumption that an occupant C is seated on a left seating zone of a rear seat 2 while being restrained by a seat belt apparatus B.

In the event of a frontal vehicle collision, when a lower body of the occupant C and the seat cushion 21 are slightly displaced in a frontward direction of the vehicle body by an inertia force, a hip of the occupant C is brought into contact with the anti-submarine bar 3 fixed to the rear floor panel 11, through the cushion pad 23 of the seat cushion 21, and the concave portion 21a of the seat cushion 21 is brought into contact and engagement with the anti-submarine bar 3. Thus, a frontward displacement of the lower body of the occupant C is suppressed.

It is understood that, when an occupant C is seated on a right seating zone of the rear seat 2 while being restrained by the seat belt apparatus B, the anti-submarine bar 3 has the above effect on the occupant C in the same manner.

As above, in the eighth embodiment, the concave portion 21a is formed in the lower surface of the seat cushion 21 to extend in the lateral direction of the vehicle body, and the anti-submarine bar 3 is attached to the rear floor panel 11 in such a manner that it extends inside the concave portion 21a in the lateral direction of the vehicle body. Thus, even if the seat cushion 21 is displaced frontwardly during a frontal vehicle collision, the anti-submarine bar 3 can suppress a frontward displacement of the lower body of the occupant C while absorbing shock caused by the frontward displacement. This makes it possible to sufficiently reduce an injury value of the occupant C due to constriction by a seat belt B1.

Further, the cushion pad 23 of the seat cushion 21 is interposed between the anti-submarine bar 3 and the occupant C. Thus, an instantaneous shock to be applied to a lumbar region of the occupant C can be absorbed by the cushion pad 23.

In the eighth embodiment, as shown in FIGS. 15 and 16, a wire frame 24 of the seat cushion 21 is fixed to the rear floor panel 11 through front and rear lock portions 32, 31 thereof. This makes it possible to reliably prevent a frontward displacement of the seat cushion 21 during a frontal vehicle collision.

### (NINTH EMBODIMENT)

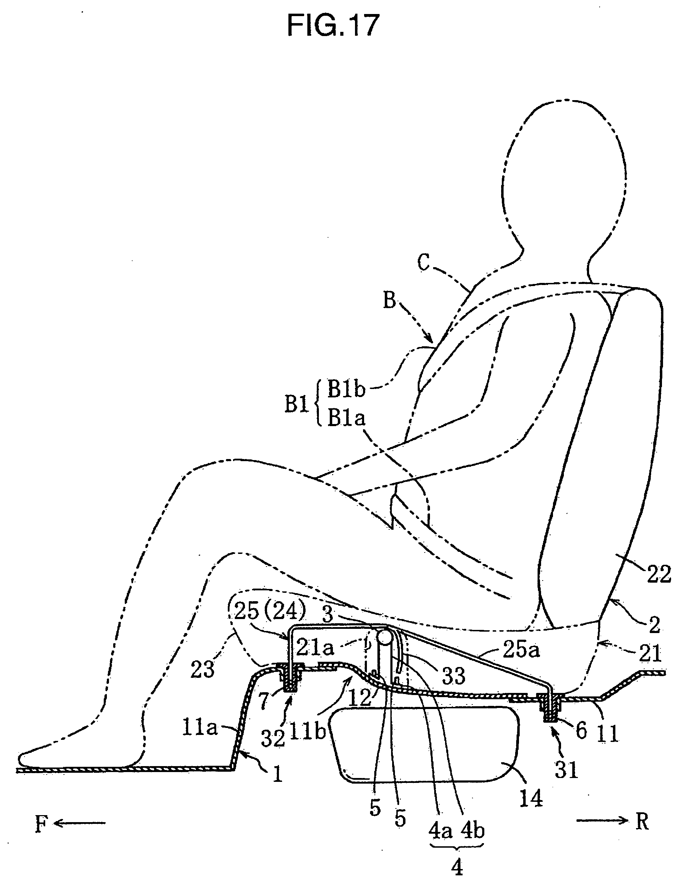

In a vehicle seat structure according to a ninth embodiment of the present invention, as shown in FIG. 17, a wire frame 24 has an engagement member provided rearward of an anti-submarine bar 3 in a longitudinal direction of a vehicle body and adapted to be engaged with an anti-submarine bar 3 from a rear side thereon in the longitudinal direction of the vehicle body, during a frontal vehicle collision. Specifically, each of a longitudinally-extending portion 25a of a first wire 25, and a longitudinally-extending portion 26a and a lateral edge-defining portion 26c of a second wire 26, has an engagement portion 33 formed using a wire member and disposed adjacent to and rearward of the anti-submarine bar 3 in the longitudinal direction of the vehicle body to extend downwardly so as to serve as the engagement member (in FIG. 17, only the first wire 25 is illustrated). The engagement portion 33 is disposed inside a concave portion 21a together with the anti-submarine bar 3. The remaining structure is approximately the same as that in the eighth embodiment.

A function/effect of the anti-submarine bar 3 will be described below.

In the event of a frontal vehicle collision, a hip of an occupant C seated in a rear seat 2 is brought into contact with the anti-submarine bar 3 through a cushion pad 23 of a seat cushion 21 to suppress a frontward-displacement of a lower body of the occupant C, in the same manner as that in the eighth embodiment.

Concurrently, the seat cushion 21 is slightly displaced in a frontward direction of the vehicle body by an inertia force during the frontal vehicle collision, and thereby the engagement portions 33 are brought into contact and engagement with the anti-submarine bar 3 from a rear side thereof in the longitudinal direction of the vehicle body.

In this manner, a frontward movement of the seat cushion 21 is suppressed by the engagement between the engagement portion 33 and the anti-submarine bar 3.

As above, in the ninth embodiment, the wire frame 24 is installed inside the seat cushion 21, and provided with the engagement portions 33 each disposed rearward of the anti-submarine bar 3 in the longitudinal direction of the vehicle body and adapted to be engaged with the anti-submarine bar 3 from the rear side thereof during a frontal vehicle collision, so as to suppress a frontward displacement of the seat cushion 21 during a frontal vehicle collision. This makes it possible to prevent the lower body of the occupant C from being displaced frontwardly together with the seat cushion 21 so as to more sufficiently reduce an injury value of the occupant C due to constriction by a seat belt B1.

In the ninth embodiment, the engagement member is formed using a wire member. Alternatively, the engagement member may be formed using a plate-shaped member.

### (TENTH EMBODIMENT)

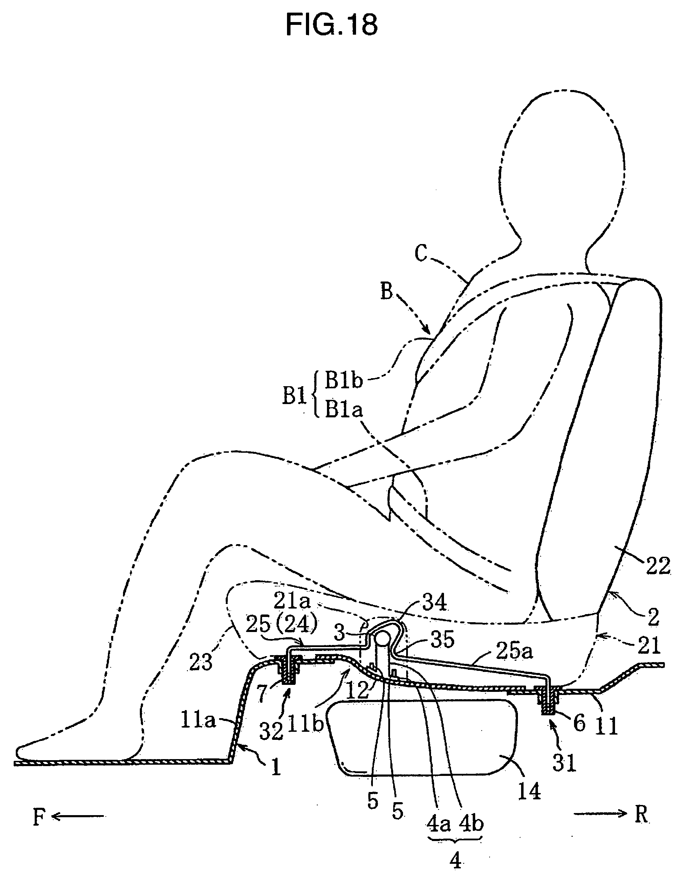

In a vehicle seat structure according to a tenth embodiment of the present invention, as shown in FIG. 18, a wire frame 24 has a rearwardly-protruding portion 34 consisting of a part thereof which is located rearward of an anti-submarine bar 3 in a longitudinal direction of a vehicle body and formed to protrude in a rearward direction of the vehicle body. A detail of this feature will be described below.

The entire longitudinal region in each of a longitudinally-extending portion 25a of a first wire 25 and a longitudinally-extending portion 26a and a lateral edge-defining portion 26c of a second wire 26, except a vicinity of the anti-submarine bar 3 (an approximately central region in the longitudinal direction of the vehicle body), is located below a height position of the anti-submarine bar 3. Each of the longitudinally-extending portion 25a of the first wire 25 and the longitudinally-extending portion 26a and the lateral edge-defining portion 26c of the second wire 26 is bent upwardly at a position thereof adjacent to and frontward of a leg body 4b of a leg member 4 in the longitudinal direction of the vehicle body and when viewed from a lateral side of the vehicle body, to form an arched-shaped rearwardly-protruding portion 34 which extends up to a vicinity of the height position of the anti-submarine bar 3, and then protrudes upwardly and in a rearward direction of the vehicle body (obliquely upwardly and rearwardly) while surrounding the anti-submarine bar 3 (in FIG 18, only the first wire 25 is illustrated). The first wire 25 further has an arched-shaped frontwardly-protruding portion 35 formed at a position adjacent to and below the rearwardly-protruding portion 34 in the longitudinally-extending portion 25a thereof to protrude downwardly and a frontward direction of the vehicle (obliquely downwardly and frontwardly). The rearwardly-protruding and frontwardly-protruding portions 34, 35 are disposed within a concave portion 21a together with the anti-submarine bar 3. The remaining structure is approximately the same as that in the eighth embodiment.

A function/effect of the anti-submarine bar 3 will be described below.

In the event of a frontal vehicle collision, a hip of an occupant C seated in a rear seat 2 is brought into contact with the anti-submarine bar 3 through a cushion pad 23 of a seat cushion 21 to suppress a frontward-displacement of a lower body of the occupant C, in the same manner as that in the eighth embodiment.

Concurrently, the seat cushion 21 is slightly displaced in the frontward direction of the vehicle body by an inertia force during the frontal vehicle collision, and thereby the rearwardly-protruding portions 34 are brought into engagement with the anti-submarine bar 3 from a rear side thereof in the longitudinal direction of the vehicle body, so that the anti-submarine bar 3 is fitted into the rearwardly-protruding portions 34, and the frontwardly-protruding portion 35 is brought into contact with the leg body 4b of the leg member 4. In this manner, a frontward movement of the seat cushion 21 is suppressed by the engagement between the rearwardly-protruding portion 34 and the anti-submarine bar 3, and the contact between the frontwardly-protruding portion 35 and the leg body 4b.

As above, in the tenth embodiment, a portion of the wire frame 24 located rearward of the anti-submarine bar 3 in the longitudinal direction of the vehicle body is formed as the rearwardly-protruding portions 34 protruding in the rearward direction of the vehicle body, and the rearwardly-protruding portions 34 is engaged with the anti-submarine bar 3 from the rear side thereof during a frontal vehicle collision. Thus, in the event of a frontal vehicle collision, a frontward displacement of the seat cushion 21 can be reliably suppressed. This makes it possible to prevent the lower body of the occupant C from being displaced frontwardly together with the seat cushion 21 so as to more sufficiently reduce an injury value of the occupant C due to constriction by a seat belt B1.

### (ELEVENTH EMBODIMENT)

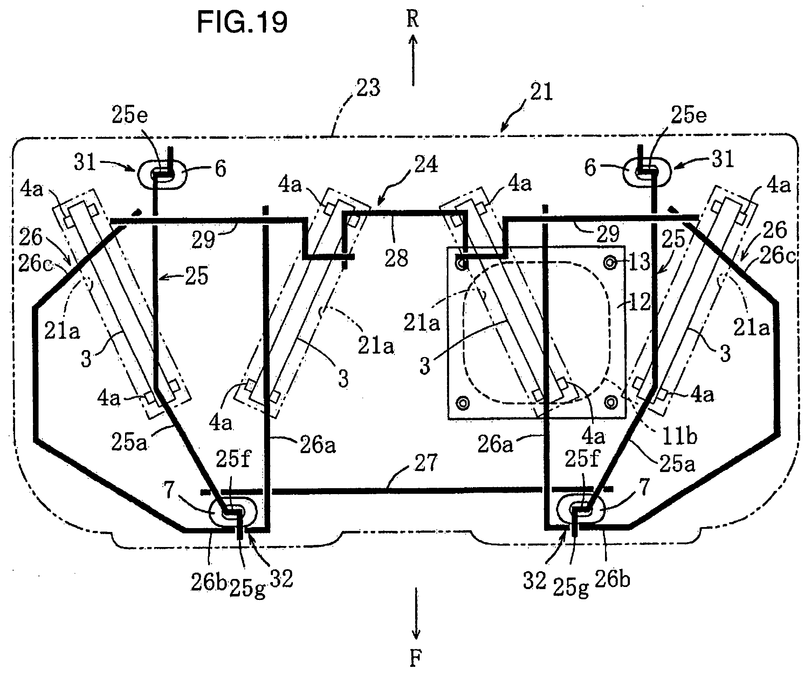

In a vehicle seat structure according to an eleventh embodiment of the present invention, as shown in FIG. 19, a pair of anti-submarine bars 3 (frontward displacement-suppressing member) are supportedly attached to a rear floor panel 11 in each of right and left regions thereof. The anti-submarine bars 3 are arranged side-by-side in a lateral direction of the vehicle body in such a manner that a distance therebetween is gradually reduced in top plan view in a frontward direction of the vehicle body to form a generally V shape. That is, the pair of anti-submarine bars 3 are arranged to extend in the lateral direction in their entirety, while inclining in the frontward and rearward directions of the vehicle body. A pair of concave portions 21a are formed in each of right and left regions of a lower surface of a seat cushion 21 in respective positions corresponding to the anti-submarine bars 3. The pair of concave portions 21a are formed in side-by-side relation in the lateral direction of the vehicle body in such a manner that a distance therebetween is gradually reduced in top plan view in the frontward direction of the vehicle body to form a generally V shape, in the same manner as that for the anti-submarine bars 3. The remaining structure is approximately the same as that in the eighth embodiment.

A function/effect of the anti-submarine bars 3 will be described below.

In the event of a frontal vehicle collision, a hip of an occupant C seated in a rear seat 2 is brought into contact with the anti-submarine bars 3 through a cushion pad 23 of the seat cushion 21 to suppress a frontward-displacement of a lower body of the occupant C, in the same manner as that in the eighth embodiment.

In the eleventh embodiment, the pair of anti-submarine bars 3 are arranged side-by-side in the lateral direction of the vehicle body in such a manner that a distance therebetween is gradually reduced in top plan view in the frontward direction of the vehicle body. Thus, as compared with an arrangement where the bar-shaped members are arranged to extend in parallel in the lateral direction of the vehicle body, the above arrangement can reliably suppress a frontward displacement of the occupant C beyond the anti-submarine bars 3. This makes it possible to more sufficiently reduce an injury value of the occupant C due to constriction by a seat belt B1.

### (TWELFTH EMBODIMENT)

In a vehicle seat structure according to a twelfth embodiment of the present invention, an anti-submarine bar 3 is supportedly attached to a rear floor panel in a detachable manner on an upper side of a service hole cover 12. A detail of this feature will be described below.

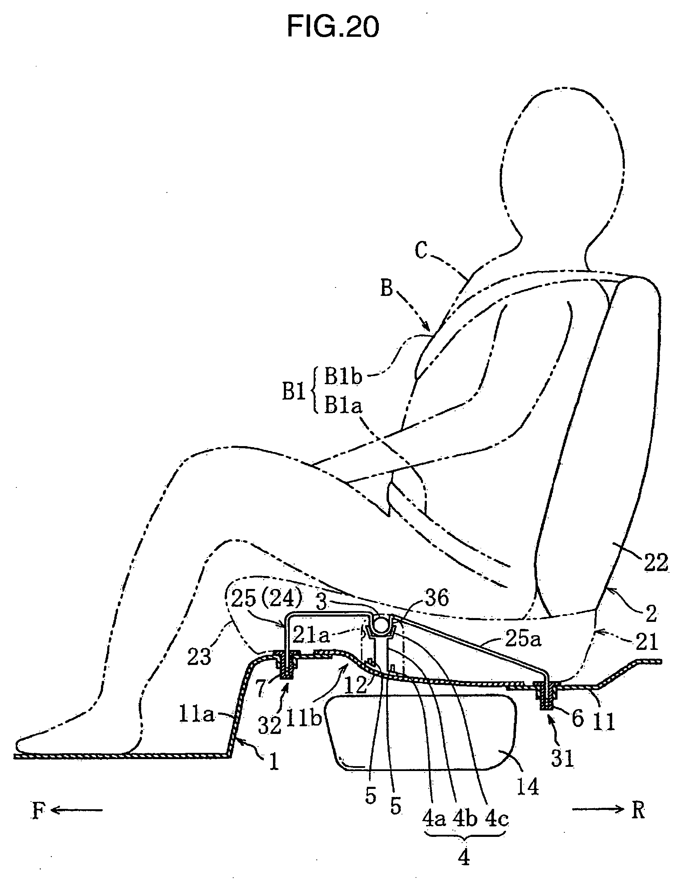

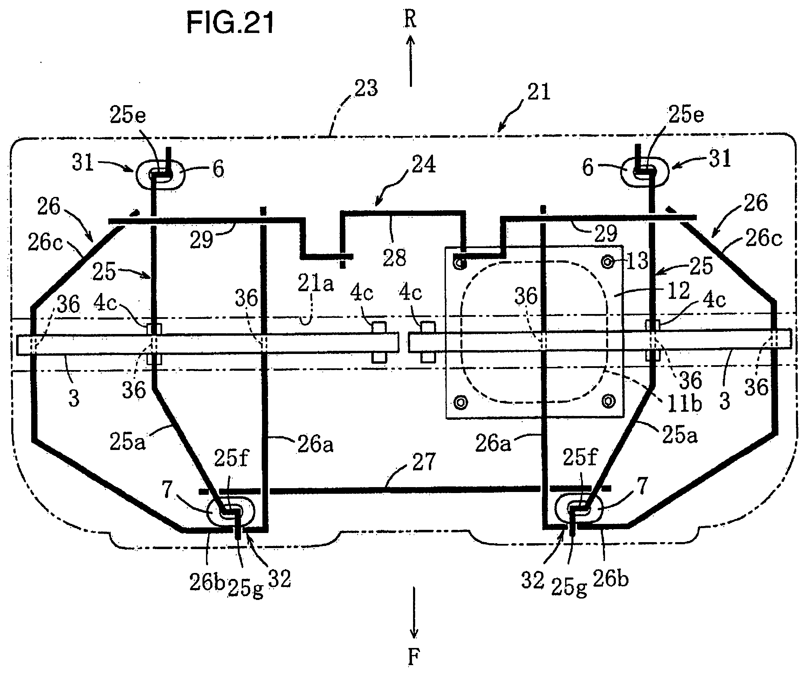

As shown in FIGS. 20 and 21, a pair of right and left anti-submarine bars 3 are disposed in respective ones of right and left seating zones of a seat cushion 21. Specifically, each of a longitudinally-extending portion 25a of a first wire 25 and a longitudinally-extending portion 26a and a lateral edge-defining portion 26c of a second wire 26 in each of the right and left seating zones has an arched-shaped downwardly-protruding portion 36 formed in an approximately central region thereof in a longitudinal direction of the vehicle body to protrude downwardly. Each of the anti-submarine bar 3 is fitted into and supported by a corresponding one of the right and left groups of downwardly-protruding portions 36 (in FIG. 20, only the first wire 25 is illustrated)

A pair of leg members 4 for supporting the left anti-submarine bar 3 are fixedly attached to a rear floor panel 11 at respective positions on right and left sides of a service hole cover 12. Each of the leg members 4 has a base portion 4a, a leg body 4b, and a generally U-shaped receiving portion 4c provided at an upper end of the leg body 4b. The receiving portions 4c of the pair of the leg members 4 are formed and arranged to receive therein respective ones of right and left ends of the left anti-submarine bar 3. In this way, the seat cushion 21 is positionally fixed. Further, in conjunction with an operation of mounting and demounting the seat cushion 21 relative to the rear floor panel 11, the anti-submarine bars 3 supportedly attached to the wire frames 24 of the seat cushion 21 can be attached and detached relative to the rear floor panel 11. A part of leg members 4 for supporting the right anti-submarine bar 3 have approximately the same structure and arrangement as those of the pair of leg members 4 for supporting the left anti-submarine bar 3.

The remaining structure is approximately the same as that in the eighth embodiment. The pair of anti-submarine bars 3 have approximately the same function/effect as that of the anti-submarine bar 3 in the eighth embodiment.

As above, in the twelfth embodiment, the anti-submarine bar 3 is detachably attached to the rear floor panel 11 on an upper side of the service hole cover 12. Thus, even if the anti-submarine bar 3 is disposed above the service hole cover 12, the anti-submarine bar 3 can be detached from the rear floor cover 11 to facilitate access to a fuel tank 14.

Although the vehicle seat structure according to the twelfth embodiment is configured such that the anti-submarine bar 3 installed inside the seat cushion 21 is received by the receiving portions 4c of the leg members 4, in order to allow the anti-submarine bar 3 to be detachably attached to the rear floor panel 11, the present invention is not limited thereto, but any other suitable mechanism capable of detachable attaching the anti-submarine bar 3 relative to the rear floor panel 11 may be used.

Further, although the vehicle seat structure according to the twelfth embodiment employs the slit-type anti-submarine bars 3, an integral-type anti-submarine bar may also be used in the same manner as the eighth to tenth embodiments.

### (THIRTEENTH EMBODIMENT)

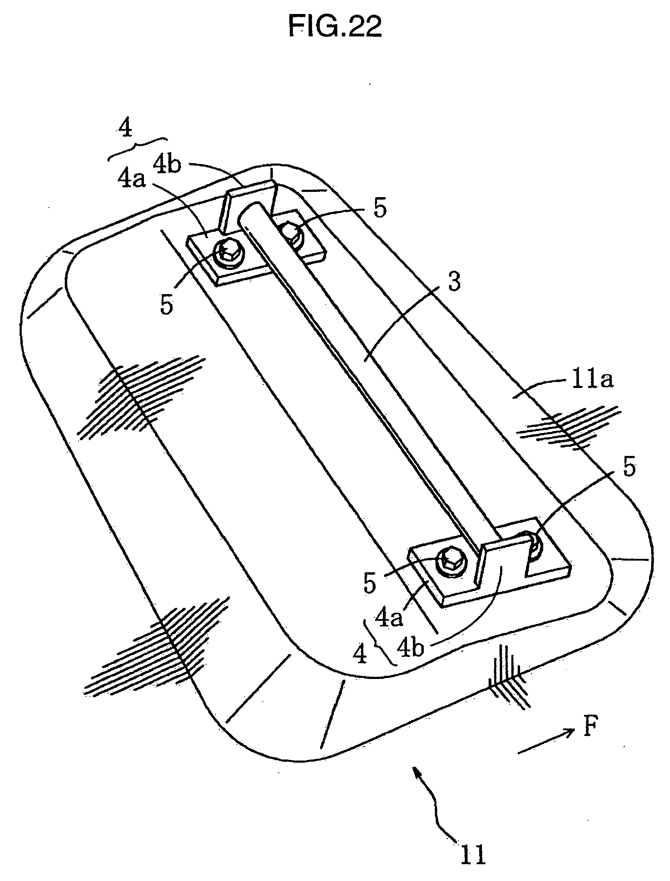

In a vehicle seat structure according to a thirteenth embodiment of the present invention, as shown in FIG. 22, a pair of right and left anti-submarine bars 3 are supportedly attached to each of right and left regions of a rear floor panel 11 through a pair of right and left leg members 4 (in FIG. 22, only one of the anti-submarine bars 3 is illustrated). Each of the leg members 4 has a rectangular plate-shaped base portion 4a, and a rectangular plate-shaped leg body 4b extending upwardly from a longitudinally central region of a laterally outward edge of the base portion 4a. Each of the leg bodies 4b of the leg members 4 has a vertical length less than that of the leg body 4b in the eighth embodiment. Each of the base portions 4a of the leg members 4 is fixedly fastened to an upper surface of the rear floor panel 11 by bolts 5, and right and left edge surfaces of anti-submarine bar 3 are weldingly fixed to respective ones of laterally opposed inner surfaces of the leg bodies 4b. Although not illustrated, a seat cushion 21 has a concave portion 21a in each of right and left regions of a lower surface thereof at a position corresponding to each of the anti-submarine bars 3. The remaining structure is approximately the same as that in the first embodiment. The pair of anti-submarine bars 3 have approximately the same function/effect as that of the anti-submarine bar 3 in the eighth embodiment.

### (FOURTEENTH EMBODIMENT)

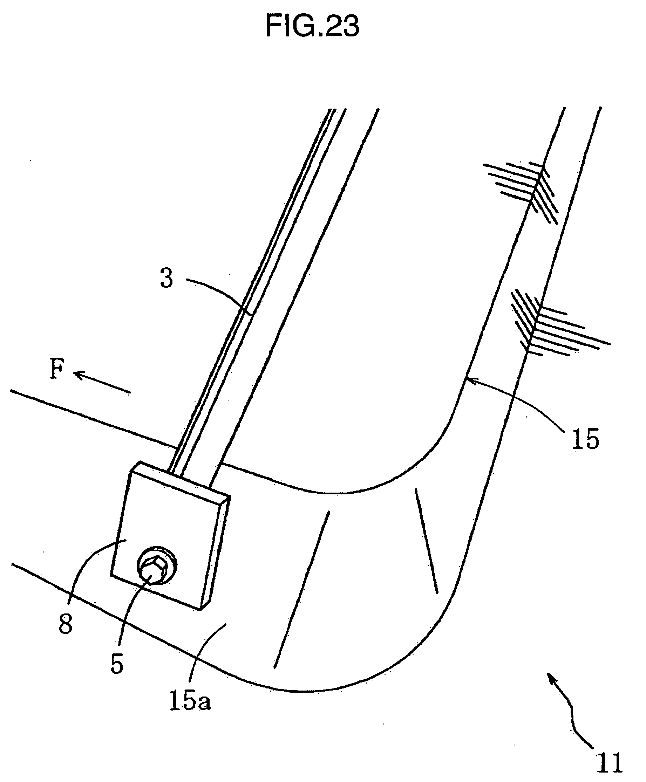

In a vehicle seat structure according to a fourteenth embodiment of the present invention, as shown in FIG. 23, a part of a rear floor panel 11 is formed as a protruding portion 15 protruding upwardly in a position corresponding to a fuel tank 14, and right and left ends of a left one of a pair of right and left anti-submarine bars 3 are fixedly fastened to respective ones of opposite lateral surfaces 15a of the protruding portion 15 (in FIG. 23, only one of the right and left ends of the left anti-submarine bar 3 is illustrated). The remaining structure is approximately the same as that in the thirteenth embodiment. The pair of anti-submarine bars 3 have approximately the same function/effect as that of the anti-submarine bars 3 in the thirteenth embodiment.

### (FIFTEENTH EMBODIMENT)

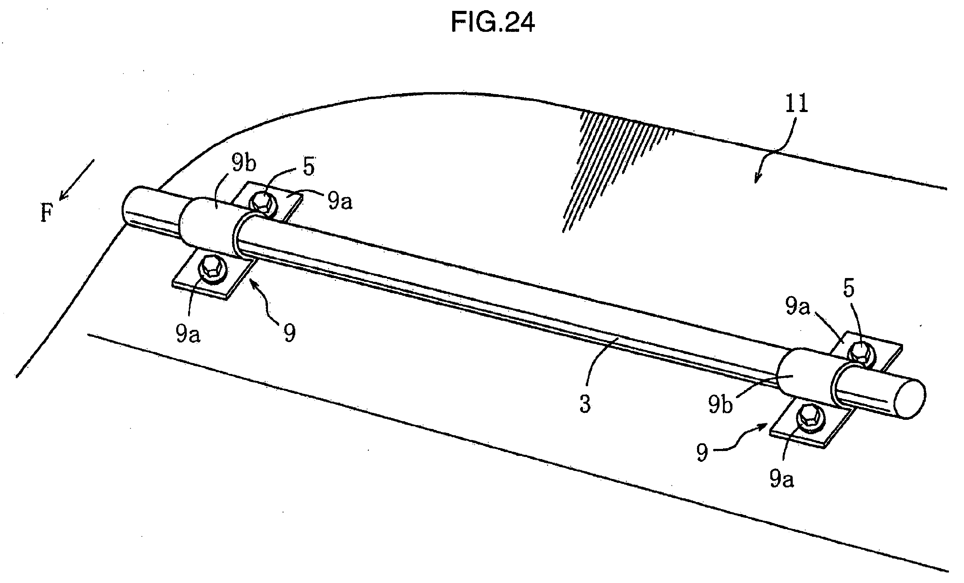

In a vehicle seat structure according to a fifteenth embodiment of the present invention, as shown in FIG. 24, a pair of right and left anti-submarine bars 3 are supportedly attached to a rear floor panel 11 through a pair of right and left bracket members 9 (in FIG 24, only one of the anti-submarine bars 3 is illustrated). Each of the bracket members 9 has a pair of rectangular plate-shaped base portions 9a arranged side-by-side with a given distance therebetween in a longitudinal direction of a vehicle, and a protruding portion 9b formed in an generally cylindrical shape when viewed from a lateral side of the vehicle, and joinedly disposed between the base portions 9a to protrude upwardly. Each of the base portions 9a is fixedly fastened to an upper surface of the rear floor panel 11 by a bolt 5, and right and left ends of the anti-submarine bars 3 are retainedly inserted in respective ones of the protruding portions 9b. The remaining structure is approximately the same as that in the thirteenth embodiment. The pair of anti-submarine bars 3 have approximately the same function/effect as that of the anti-submarine bars 3 in the thirteenth embodiment.

### (SIXTEENTH EMBODIMENT)

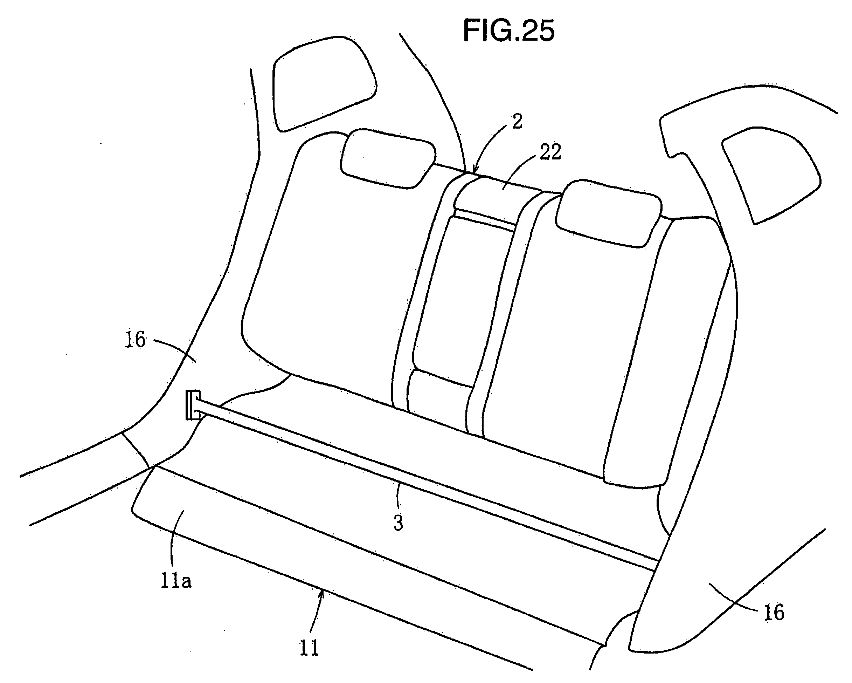

In a vehicle seat structure according to a sixteenth embodiment of the present invention, as shown in FIG. 25, with a view to improve rigidity of a vehicle body, right and left ends of an anti-submarine bar 3 is supportedly attached to respective ones of right and left sidewall surfaces 16 of the vehicle body on a laterally outward of a seat cushion 21. In FIG. 25, the seat cushion 21 and a wire frame 24 are omitted from illustration for the purpose of simplifying the illustration. The remaining structure is approximately the same as that in the first embodiment. The anti-submarine bar 3 has approximately the same function/effect as that of the anti-submarine bar 3 in the eighth embodiment.

Although the vehicle seat structure according to the above embodiments is applied to a rear seat 2 in a vehicle equipped with a front seat and the rear seat 2, the present invention is not limited thereto. For example, the present invention may be applied to a front seat in a so-called three-door hatchback vehicle equipped with only the front seat. In view of a structure of such a three-door hatchback vehicle, it is desirable to attach the right and left ends of the anti-submarine bar 3 to respective ones of right and left sidewall surfaces of a vehicle body thereof.

### (SEVENTEENTH EMBODIMENT)

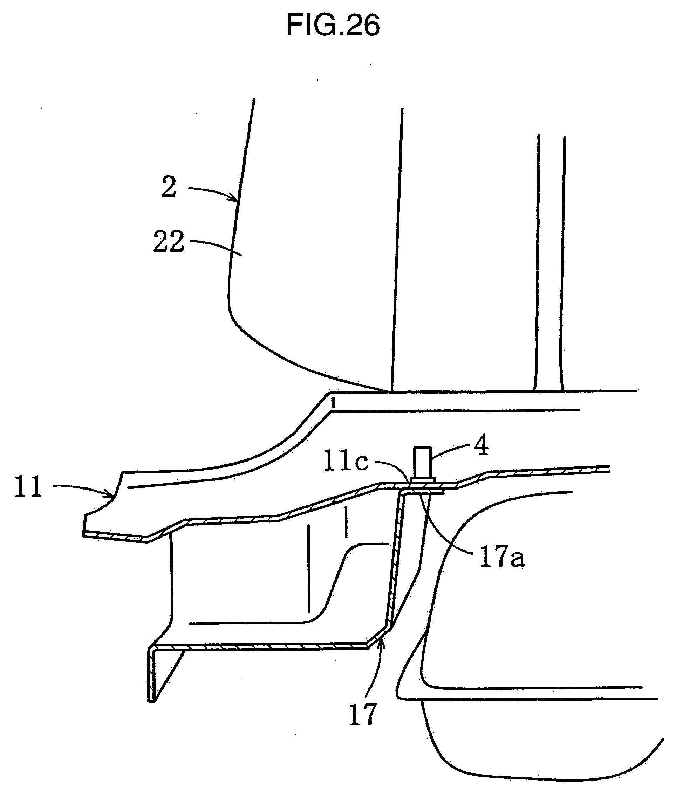

In a vehicle seat structure according to a seventeenth embodiment of the present invention, as shown in FIG. 26, each of a pair of right and left leg members 4 for supporting an anti-submarine bar 3 are fixedly attached to a rear floor panel 11 at a position above a respective one of a pair of right and left side members (vehicle body-reinforcing member) extending in a longitudinal direction of a vehicle body, specifically, to a superimposed portion 11c between the rear floor panel 11 and a flange 17a of the side member 17 (in FIG. 26, only the right leg member 4 is illustrated). This makes it possible to improve strength for mounting the anti-submarine bar 3. In FIG. 26, a seat cushion 21 and the anti-submarine bar 3 are omitted from illustration for the purpose of simplifying the illustration. The remaining structure is approximately the same as that in the eighth embodiment. The anti-submarine bar 3 has approximately the same function/effect as that of the anti-submarine bar 3 in the eighth embodiment.

In the seventeenth embodiment, right and left ends of the anti-submarine bar 3 are fixedly attached to the rear floor panel 11 at respective positions on an upper side of the side members 17. Alternatively, each of the right and left ends of the anti-submarine bar 3 may be fixedly attached to the rear floor panel 11 at a position on an upper side of a cross member, specifically, to a superimposed portion 11c between the rear floor panel 11 and the cross member.

### (EIGHTEEN EMBODIMENT)

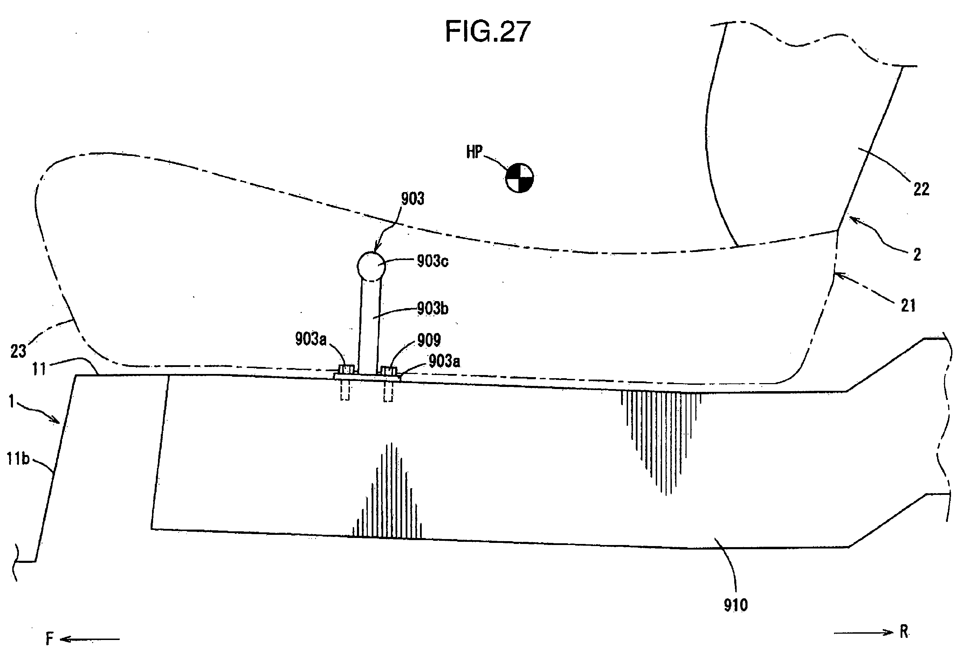

In cases where an anti-submarine bar is fixed to a structural member of a vehicle body, the structural member of the vehicle body is not limited to a rear floor panel 11. For example, as illustrated in FIG. 27 which shows a vehicle seat structure according to an eighteenth embodiment of the present invention, a base portion 903a provided at each of right and left ends of an anti-submarine member 903 may be fixed to one of a pair of side frames 910 extending in a longitudinal direction of a vehicle body along right and left ends of a rear floor panel 11, so as to allow an anti-submarine portion 903c to be fixed at the aforementioned adequate position.

As shown in FIG. 27, the anti-submarine member 903 has a pair of leg portions 903b extending upwardly from respective ones of the base portions 903a. Each of the base portions 903 is fastened to a corresponding one of the side frames 910 by bolts 903, to fix the anti-submarine member 903 to the vehicle body in such a manner that the anti-submarine portion 903c located at upper ends of the leg portions 903b is fixed at the adequate position.

In the eighteenth embodiment, the anti-submarine member 903 is fixed to the side frames 910 as a vehicle body-reinforcing member. This makes it possible to reliably suppress a frontward displacement of the anti-submarine member 903 and consequently more reliably suppress the respective frontward displacements of a seat cushion 21 and an occupant C seated on the seat cushion 21.

It is understood that the vehicle body-reinforcing member for allowing the anti-submarine member 903 to be fastened thereto is not limited to the side frame, but may be a cross member extending in a lateral direction of the vehicle body.

### (NINETEENTH EMBODIMENT)

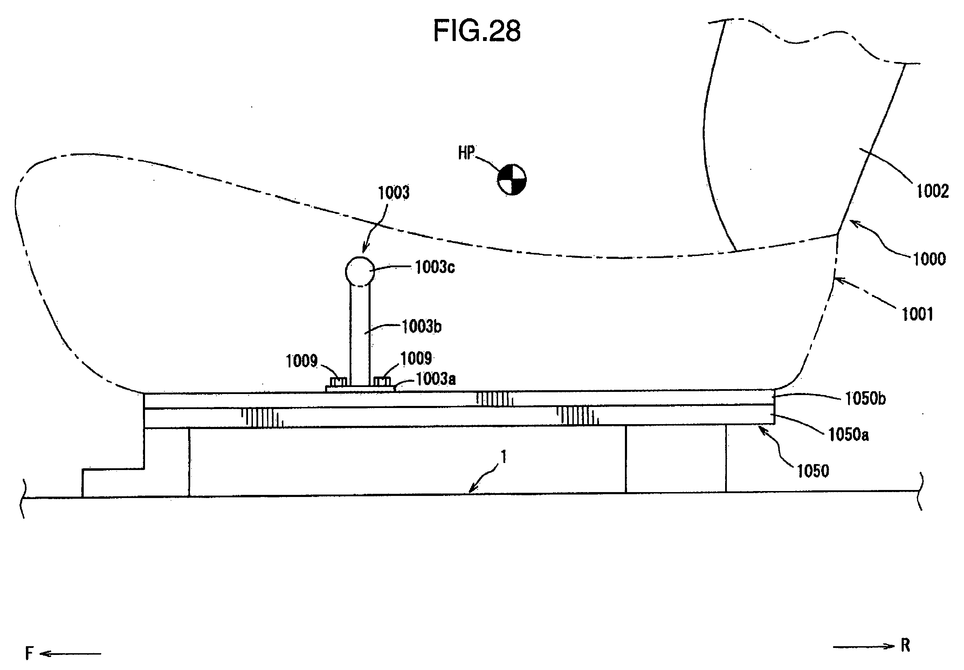

Although the above embodiments have been described based on one example where the anti-submarine bar (3, etc.) and other components are arranged correspondingly to the seat cushion 21 of the rear seat 2, the present invention may also be applied to a front seat 1000 as illustrated in FIG. 28 which shows a vehicle seat structure according to a nineteenth embodiment of the present invention.

Generally, the front seat 1000 is adapted to be slidably moved in a longitudinal direction of a vehicle body along a slid rail 1050 as shown in FIG. 28 so as to adjust a longitudinal position thereof.

The slide rail 1050 comprises a lower rail 1050a fixed to a floor panel 1, and an upper rail 1050b slidably attached to the lower rail 1050a, and the front seat 1000 has a seat cushion 1001 fixed to the upper rail 1050b. Thus, the entire front seat 1000 including a seat back 1002 can be slidingly moved in the longitudinal direction of the vehicle body.

In the nineteenth embodiment, an anti-submarine member 1003 has a pair of right and left base portions 1003a, and a pair of right and left leg portions 1003b each extending vertically upwardly from a corresponding one of the base portions 1003a. Each of the base portions 1003a is fixedly fastened onto the upper rail 1050b by bolts 1009.

The anti-submarine member 1003 further has an anti-submarine portion 1003c extending from respective upper ends of the leg portions 1003b in a lateral direction of the vehicle body. The anti-submarine portion 1003c is adapted, when the seat cushion 1001 is mounted on the floor panel 1 in a given position, to be set at the adequate position.

As above, in the vehicle seat structure applied to the front seat 1000, the anti-submarine member 1003 can bring out an effect of suppressing a frontward displacement of an occupant C seated in the front seat 1000 while absorbing shock caused by the frontward displacement, during a frontal vehicle collision or the like, so as to effectively reduce an injury value of the occupant due to constriction by a seat belt B1, in the same manner as that in the vehicle seat structure applied to the rear seat 2.

In the second to nineteenth embodiments, an element or component equivalent to that in the first embodiment described with reference to FIGS. 1 to 6 is defined by a common reference numeral or code, and its detailed description is omitted.

Although each of the anti-submarine bar (3, etc.) and the anti-submarine member (903, etc.) in the above embodiments is formed in an elongate bar shape, the present invention is not limited thereto, but a laterally-extending member having any other suitable shape, such as an elongate plate shape, may be used.

In a correspondence between elements of the appended claims and the above embodiments, the frontward-displacement suppressing member and the anti-submarine bar in the appended claims correspond to the anti-submarine bar (303, 403, 503, 603) and the anti-submarine member (903, 1003). Further, the sensing member in the appended claims corresponds to the displacement-sensing lever portion (400b, 600b), and the moving member in the appended claims corresponds to the bar-lifting actuator portion (400c, 600c). However, each of the elements of the appended claims is not limited to the elements or components in the above embodiments, but may encompass various other types of elements or components.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A vehicle seat structure placed on a floor of a vehicle body, the vehicle seat structure including:
a seat cushion (21);
a seat back (22) connected to the seat cushion;
a seated-occupant restraining seat belt apparatus (B), and
a frontward-displacement suppressing member (3, 303, 403, 503, 603, 903, 1003) adapted to suppress a frontward displacement of an occupant seated on the seat cushion (21), during a frontal vehicle collision, the frontward-displacement suppressing member being provided between an upper surface of the seat cushion (21) and the floor (1) to extend in a lateral direction of the vehicle body in its entirety,
wherein
the seat belt apparatus includes a lap belt (B1a); and
the seat cushion (21) is provided with a cushion pad (23) and **characterized in that** the seat cushion (21) is provided with the frontward-displacement suppressing member (3), wherein the frontward-displacement suppressing member (3) is adapted to be set at an adequate position falling within a positional range spaced apart from a hip point (HP) of the seated occupant, which is an intermediate position between right and left femoral heads of the occupant seated on the seat cushion (21), in a frontward direction of the vehicle body by a distance of zero to 160 mm and lying below the hip point (HP) of the seated occupant by a distance of 20 to 100 mm, while extending in the lateral direction of the vehicle body inside the seat cushion (21).

2. The vehicle seat structure according to claim 1, **characterized in that**:
the seat belt apparatus includes a lap belt (B1a) and a lap pretensioner mechanism (B2); and
the seat cushion (21) is provided with a cushion pad (23) and the frontward-displacement suppressing member (3, 503), wherein the frontward-displacement suppressing member (3, 503) is adapted to be set at an adequate position falling within a positional range spaced apart from a hip point (HP) of the seated occupant in a frontward direction of the vehicle body by a distance of zero to 100 mm, while extending in the lateral direction of the vehicle body inside the seat cushion (21).

3. The vehicle seat structure according to claim 1 or claim 2, **characterized by** further comprising:
a sensing member (400b, 600b) adapted to sense a frontward displacement of the seated occupant during a frontal vehicle collision; and
a moving member (400c, 600c) adapted to cause an upward movement of the frontward-displacement suppressing member (403) installed at a position below the adequate position,wherein the sensing member and the moving member are connected to each other by a link member (400d) in such a manner as to allow the moving member to move the frontward-displacement suppressing member upwardly in conjunction with the sensing of the frontward displacement of the seated occupant by the sensing member.

4. The vehicle seat structure according to claim 1, **characterized by** further comprising a displacement-restricting member (24, 124, 308) adapted to restrict a frontward displacement of the frontward-displacement suppressing member (3, 203, 303) during the frontal vehicle collision, wherein:
the seat belt apparatus includes a lap belt (B1a);
the frontward-displacement suppressing member is installed to extend in the lateral direction of the vehicle body inside the seat cushion (21); and
the displacement-restricting member is adapted, during the frontal vehicle collision, to substantially fix a position of the frontward-displacement suppressing member within the seat cushion to thereby restrict the frontward displacement of the frontward-displacement suppressing member.

5. The vehicle seat structure according to claim 4, **characterized in that** the displacement-restricting member (24) is a seat cushion-reinforcing member for reinforcing the seat cushion, wherein the frontward-displacement suppressing member (3) is fixed to the seat cushion-reinforcing member inside the seat cushion.

6. The vehicle seat structure according to claim 5, **characterized in that** the seat cushion-reinforcing member (24) is fixed to the vehicle body.

7. The vehicle seat structure according to claim 6, **characterized in that** the seat cushion-reinforcing member is a wire member (24) provided inside the seat cushion, the wire member (24) being formed and arranged to have a first portion connected to the vehicle body at a connection position (31) on a rear side of the seat cushion, and a second portion extending from the connection position in the frontward direction of the vehicle body, wherein the frontward-displacement suppressing member (3) is connected to an upper surface of the second portion of the wire member (24).

8. The vehicle seat structure according to claim 4, **characterized in that** the displacement-restricting member is a protruding member (308) which protruding upwardly from the floor at a position frontward of the frontward-displacement suppressing member in a longitudinal direction of the vehicle body.

9. The vehicle seat structure according to claim 8, **characterized in that** the protruding member (308) is fixed to a vehicle body-reinforcing member (310) for reinforcing the vehicle body.

10. The vehicle seat structure according to claim 1, **characterized in that** the seat cushion has a concave portion (21a) formed in a lower surface thereof to extend in the lateral direction of the vehicle body, wherein the frontward-displacement suppressing member (3) is attached to the vehicle body in such a manner that it extends inside the concave portion in the lateral direction of the vehicle body.

11. The vehicle seat structure according to claim 10, **characterized in that** the seat cushion is internally provided with a wire member (24, 25) having an engagement member (33) which is disposed rearward of the frontward-displacement suppressing member in a longitudinal direction of the vehicle body, and adapted to be engaged with the frontward-displacement suppressing member (3) from a rear side thereof in the longitudinal direction of the vehicle body, during a frontal vehicle collision.

12. The vehicle seat structure according to claim 11, **characterized in that** the engagement member comprises a protruding portion (34, 35) consisting of a part of the wire member (24) which is located rearward of the frontward-displacement suppressing member (3) in the longitudinal direction of the vehicle body and formed to protrude in a rearward direction of the vehicle body.

13. The vehicle seat structure according to any one of claims 10 to 12, **characterized in that** the frontward-displacement suppressing member (3) comprises a pair of bar-shaped members (3, 3) arranged side-by-side in the lateral direction of the vehicle body in such a manner that a distance therebetween is gradually reduced in top plan view in the frontward direction of the vehicle body.

14. The vehicle seat structure according to any one of claims 10 to 13, **characterized in that** the floor has a service hole cover which is located under the seat cushion and adapted to cover a service hole for access to a fuel tank (14) disposed below the floor, wherein the frontward-displacement suppressing member is detachably attached to the vehicle body on an upper side of the service hole cover.

15. The vehicle seat structure according to any one of claims 1 to 14, **characterized in that** the frontward-displacement suppressing member is an anti-submarine member (3) formed in an elongated shape.

## Patentansprüche

1. Fahrzeugsitzkonstruktion, die auf dem Boden einer Fahrzeugkarosserie angebracht ist, wobei die Fahrzeugsitzkonstruktion Folgendes umfasst:
ein Sitzkissen (21);
eine Sitzlehne (22), die mit dem Sitzkissen verbunden ist;
eine einen sitzenden Insassen zurückhaltende Sicherheitsgurtvorrichtung (B); und
ein eine Vorverlagerung unterdrückendes Element (3, 303, 403, 503, 603, 903, 1003), das dazu ausgelegt ist, eine Vorverlagerung eines auf dem Sitzkissen (21) sitzenden Insassen während einer Frontalkollision des Fahrzeugs zu unterdrücken, wobei das eine Vorverlagerung unterdrückende Element zwischen einer Oberseite des Sitzkissens (21) und dem Boden (1) vorgesehen ist, um sich insgesamt in einer seitlichen Richtung der Fahrzeugkarosserie zu erstrecken,
wobei die Sicherheitsgurtvorrichtung einen Beckengurt (B1 a) umfasst; und
das Sitzkissen (21) mit einem Kissenpolster (23) versehen ist,
**dadurch gekennzeichnet, dass** das Sitzkissen (21) mit dem eine Vorverlagerung unterdrückenden Element (3) versehen ist, wobei das eine Vorverlagerung unterdrückende Element (3) auf eine geeignete Position eingestellt werden kann, die in einen Positionsbereich fällt, der von einem Hüftpunkt (HP) des sitzenden Insassen, der eine Position in der Mitte zwischen dem rechten und dem linken Oberschenkelkopf des auf dem Sitzkissen (21) sitzenden Insassen ist, in Vorwärtsrichtung der Fahrzeugkarosserie um eine Strecke von 0 bis 160 mm beabstandet ist und eine Strecke von 20 bis 100 mm unter dem Hüftpunkt (HP) des sitzenden Insassen liegt, während er sich innerhalb des Sitzkissens (21) in seitlicher Richtung der Fahrzeugkarosserie erstreckt.

2. Fahrzeugsitzkonstruktion nach Anspruch 1, **dadurch gekennzeichnet, dass**:
die Sicherheitsgurtvorrichtung einen Beckengurt (B1 a) und einen Beckengurt-Vorspannmechanismus (B2) umfasst; und
das Sitzkissen (21) mit einem Kissenpolster (23) und dem eine Vorverlagerung unterdrückenden Element (3, 503) versehen ist, wobei das eine Vorverlagerung unterdrückende Element (3, 503) auf eine geeignete Position eingestellt werden kann, die in einen Positionsbereich fällt, der von einem Hüftpunkt (HP) des sitzenden Insassen in Vorwärtsrichtung der Fahrzeugkarosserie um eine Strecke von 0 bis 100 mm beabstandet ist, während er sich innerhalb des Sitzkissens (21) in seitlicher Richtung der Fahrzeugkarosserie erstreckt.

3. Fahrzeugsitzkonstruktion nach Anspruch 1 oder Anspruch 2, **dadurch gekennzeichnet, dass** sie ferner Folgendes umfasst:
ein Erfassungselement (400b, 600b), das dazu ausgelegt ist, eine Vorverlagerung des sitzenden Insassen während einer Frontalkollision des Fahrzeugs zu erfassen; und
ein Bewegungselement (400c, 600c), das dazu ausgelegt ist, eine Aufwärtsbewegung des an einer Position unterhalb der geeigneten Position montierten, eine Vorverlagerung unterdrückenden Elements (403) zu verursachen, wobei das Erfassungselement und das Bewegungselement über ein Verbindungsglied (400d) so miteinander verbunden sind, dass das Bewegungselement das eine Vorverlagerung unterdrückende Element in Verbindung mit dem Erfassen der Vorverlagerung des sitzenden Insassen durch das Erfassungselement nach oben bewegen kann.

4. Fahrzeugsitzkonstruktion nach Anspruch 1, **dadurch gekennzeichnet, dass** sie ferner ein die Verlagerung begrenzendes Element (24, 124, 308) umfasst, das dazu ausgelegt ist, eine Vorverlagerung des eine Vorverlagerung unterdrückenden Elements (3, 203, 303) während der Frontalkollision des Fahrzeugs zu begrenzen, wobei:
die Sicherheitsgurtvorrichtung einen Beckengurt (B1 a) umfasst;
das eine Vorverlagerung unterdrückende Element so montiert ist, dass es sich innerhalb des Sitzkissens (21) in seitlicher Richtung der Fahrzeugkarosserie erstreckt; und
das eine Verlagerung begrenzende Element dazu ausgelegt ist, während einer Frontalkollision des Fahrzeugs eine Position des eine Vorverlagerung unterdrückenden Elements innerhalb des Sitzkissens im Wesentlichen zu fixieren, um dadurch die Vorverlagerung des eine Vorverlagerung unterdrückenden Elements zu begrenzen.

5. Fahrzeugsitzkonstruktion nach Anspruch 4, **dadurch gekennzeichnet, dass** das eine Verlagerung begrenzende Element (24) ein Sitzkissenverstärkungselement zur Verstärkung des Sitzkissens ist, wobei das eine Vorverlagerung unterdrückende Element (3) an dem Sitzkissenverstärkungselement im Inneren des Sitzkissens befestigt ist.

6. Fahrzeugsitzkonstruktion nach Anspruch 5, **dadurch gekennzeichnet, dass** das Sitzkissenverstärkungselement (24) an der Fahrzeugkarosserie befestigt ist.

7. Fahrzeugsitzkonstruktion nach Anspruch 6, **dadurch gekennzeichnet, dass** das Sitzkissenverstärkungselement ein im Inneren des Sitzkissens vorgesehenes Drahtelement (24) ist, wobei das Drahtelement (24) so ausgebildet und angeordnet ist, dass es einen mit der Fahrzeugkarosserie an einer Verbindungsposition (31) auf einer Rückseite des Sitzkissens verbundenen ersten Abschnitt und einen sich von der Verbindungsposition in Vorwärtsrichtung der Fahrzeugkarosserie erstreckenden zweiten Abschnitt aufweist, wobei das eine Vorverlagerung unterdrückende Element (3) mit einer Oberseite des zweiten Abschnitts des Drahtelements (24) verbunden ist.

8. Fahrzeugsitzkonstruktion nach Anspruch 4, **dadurch gekennzeichnet, dass** das eine Verlagerung begrenzende Element ein vorspringendes Element (308) ist, das an einer Position vor dem eine Vorverlagerung unterdrückenden Element in Längsrichtung der Fahrzeugkarosserie vom Boden nach oben vorspringt.

9. Fahrzeugsitzkonstruktion nach Anspruch 8, **dadurch gekennzeichnet, dass** das vorspringende Element (308) an einem Fahrzeugkarosserieverstärkungselement (310) zur Verstärkung der Fahrzeugkarosserie befestigt ist.

10. Fahrzeugsitzkonstruktion nach Anspruch 1, **dadurch gekennzeichnet, dass** das Sitzkissen einen konkaven Abschnitt (21 a) aufweist, der in seiner Unterseite so ausgebildet ist, dass er sich in seitlicher Richtung der Fahrzeugkarosserie erstreckt, wobei das eine Vorverlagerung unterdrückende Element (3) so an der Fahrzeugkarosserie befestigt ist, dass es sich innerhalb des konkaven Abschnitts in seitlicher Richtung der Fahrzeugkarosserie erstreckt.

11. Fahrzeugsitzkonstruktion nach Anspruch 10, **dadurch gekennzeichnet, dass** das Sitzkissen in seinem Inneren mit einem Drahtelement (24, 25) versehen ist, das ein Eingriffselement (33) aufweist, das in Längsrichtung der Fahrzeugkarosserie hinter dem eine Vorverlagerung unterdrückenden Element angeordnet ist und während einer Frontalkollision des Fahrzeugs mit dem eine Vorverlagerung unterdrückenden Element (3) von seiner Rückseite aus in Längsrichtung der Fahrzeugkarosserie in Eingriff gebracht werden kann.

12. Fahrzeugsitzkonstruktion nach Anspruch 11, **dadurch gekennzeichnet, dass** das Eingriffselement einen vorspringenden Abschnitt (34, 35) umfasst, der aus einem Teil des Drahtelements (24) besteht, der sich in Längsrichtung der Fahrzeugkarosserie hinter dem eine Vorverlagerung unterdrückenden Element (3) befindet und dazu ausgebildet ist, in Rückwärtsrichtung der Fahrzeugkarosserie vorzuspringen.

13. Fahrzeugsitzkonstruktion nach einem der Ansprüche 10 bis 12, **dadurch gekennzeichnet, dass** das eine Vorverlagerung unterdrückende Element (3) ein Paar stangenförmige Elemente (3, 3) umfasst, die nebeneinander in seitlicher Richtung der Fahrzeugkarosserie so angeordnet sind, dass ein Abstand dazwischen in Draufsicht in Vorwärtsrichtung der Fahrzeugkarosserie allmählich kleiner wird.

14. Fahrzeugsitzkonstruktion nach einem der Ansprüche 10 bis 13, **dadurch gekennzeichnet, dass** der Boden eine Wartungslochabdeckung aufweist, die sich unter dem Sitzkissen befindet und dazu ausgelegt ist, ein Wartungsloch für den Zugang zu einem unter dem Boden angeordneten Kraftstofftank (14) abzudecken, wobei das eine Vorverlagerung unterdrückende Element auf einer Oberseite der Wartungslochabdeckung lösbar an der Fahrzeugkarosserie befestigt ist.

15. Fahrzeugsitzkonstruktion nach einem der Ansprüche 1 bis 14, **dadurch gekennzeichnet, dass** das eine Vorverlagerung unterdrückende Element ein in einer langgestreckten Form ausgebildetes Anti-Submarining-Element (3) ist.

## Revendications

1. Structure de siège de véhicule placée sur le plancher d'une carrosserie de véhicule, la structure de siège de véhicule comportant :
un coussin de siège (21) ;
un dossier de siège (22) relié au coussin de siège ;
un dispositif de ceinture de sécurité (B) retenant un passager assis, et
un élément de suppression de déplacement vers l'avant (3, 303, 403, 503, 603, 903, 1003) qui sert à supprimer le déplacement vers l'avant d'un passager assis sur le coussin de siège (21) pendant une collision frontale du véhicule, l'élément de suppression du déplacement vers l'avant étant agencé entre une surface supérieure du coussin de siège (21) et le plancher (1) pour s'étendre entièrement dans une direction latérale de la carrosserie du véhicule,
le dispositif de ceinture de sécurité comportant une ceinture abdominale (B1a) ; et
le coussin de siège (21) est pourvu d'un rembourrage de coussin (23),
**caractérisé en ce que** le coussin de siège (21) est pourvu de l'élément de suppression de déplacement vers l'avant (3), l'élément de suppression de déplacement vers l'avant (3) étant prévu pour être réglé à une position adéquate qui tombe dans une plage de position espacée d'une distance de 0 à 160 mm d'un point de hanche (HP) du passager assis, qui est une position intermédiaire entre les têtes de fémur droite et gauche du passager assis sur le coussin de siège (21), dans une direction vers l'avant de la carrosserie et qui est située à une distance de 20 à 100 mm au-dessous du point de hanche (HP) du passager assis, alors qu'il s'étend, à l'intérieur du coussin de siège (21), dans la direction latérale de la carrosserie de véhicule.

2. Structure de siège de véhicule selon la revendication 1, **caractérisée en ce que** :
le dispositif de ceinture de sécurité comprend une ceinture abdominale (B1 a) et un mécanisme de prétensionnement de ceinture abdominale (B2) ; et
le coussin de siège (21) est pourvu d'un rembourrage de coussin (23) et de l'élément de suppression de déplacement vers l'avant (3, 503), l'élément de suppression de déplacement vers l'avant (3, 503) étant prévu pour être réglé à une position adéquate qui tombe dans la plage de position espacée d'une distance de 0 à 100 mm du point de hanche (HP) du passager assis, dans une direction avant de la carrosserie de véhicule, alors qu'il s'étend, à l'intérieur du coussin de siège (21), dans la direction latérale de la carrosserie de véhicule.

3. Structure de siège de véhicule selon la revendication 1 ou 2, **caractérisée en ce qu'**elle comprend en outre :
un élément de détection (400b, 600b) qui est prévu pour détecter un déplacement vers l'avant du passager assis pendant une collision frontale du véhicule ; et
un élément mobile (400c, 600c) qui est prévu pour entraîner un mouvement vers le haut de l'élément de suppression du déplacement vers l'avant (403) monté au niveau d'une position située au-dessous de la position adéquate, l'élément de détection et l'élément mobile étant reliés l'un à l'autre par un élément de liaison (400d) de manière à permettre à l'élément mobile de déplacer vers le haut l'élément de suppression de déplacement vers l'avant, en liaison avec la détection du déplacement vers l'avant du passager assis par l'élément de détection.

4. Structure de siège de véhicule selon la revendication 1, **caractérisée en ce qu'**elle comprend en outre un élément de limitation de déplacement (24, 124, 308) prévu pour limiter un déplacement vers l'avant de l'élément de suppression de déplacement vers l'avant (3, 203, 303) pendant la collision frontale du véhicule,
le dispositif de ceinture de sécurité comportant une ceinture abdominale (B1a) ;
l'élément de suppression de déplacement vers l'avant étant monté de telle sorte qu'il s'étend à l'intérieur du coussin de siège (21) en direction latérale de la carrosserie de véhicule ; et
l'élément de limitation de déplacement étant prévu pour fixer, pendant la collision frontale du véhicule, essentiellement une position de l'élément de suppression de déplacement vers l'avant à l'intérieur du coussin de siège pour limiter ainsi le déplacement vers l'avant de l'élément de suppression de déplacement vers l'avant.

5. Structure de siège de véhicule selon la revendication 4, **caractérisée en ce que** l'élément de limitation de déplacement (24) est un élément de renforcement de coussin de siège pour renforcer le coussin du siège, l'élément de suppression de déplacement vers l'avant (3) étant fixé à l'élément de renforcement de coussin de siège, à l'intérieur du coussin de siège.

6. Structure de siège de véhicule selon la revendication 5, **caractérisée en ce que** l'élément de renforcement de coussin (24) du siège est fixé à la carrosserie de véhicule.

7. Structure de siège de véhicule selon la revendication 6, **caractérisée en ce que** l'élément de renforcement de coussin du siège est un élément en forme de fil (24) prévu à l'intérieur du coussin de siège, l'élément en forme de fil (24) étant réalisé et disposé de telle sorte qu'il présente un premier tronçon relié à la carrosserie du véhicule à une position de liaison (31) sur le côté arrière du coussin de siège, et un deuxième tronçon s'étendant depuis la position de liaison dans la direction vers l'avant de la carrosserie de véhicule, l'élément de suppression de déplacement vers l'avant (3) étant relié à une surface supérieure du deuxième tronçon de l'élément en forme de fil (24).

8. Structure de siège de véhicule selon la revendication 4, **caractérisée en ce que** l'élément de limitation de déplacement est un élément en saillie (308) qui fait saillie depuis le fond vers le haut, à une position en avant de l'élément de suppression de déplacement vers l'avant dans une direction longitudinale de la carrosserie du véhicule.

9. Structure de siège de véhicule selon la revendication 8, **caractérisée en ce que** l'élément en saillie (308) est fixé à un élément de renforcement (310) de la carrosserie du véhicule pour renforcer la carrosserie du véhicule.

10. Structure de siège de véhicule selon la revendication 1, **caractérisée en ce que** le coussin de siège possède un tronçon (21 a) concave réalisé sur une surface inférieure de celui-ci pour s'étendre dans la direction latérale de la carrosserie du véhicule, l'élément de suppression de déplacement vers l'avant (3) étant fixé à la carrosserie du véhicule de telle sorte qu'il s'étend à l'intérieur du tronçon concave dans la direction latérale de la carrosserie du véhicule.

11. Structure de siège de véhicule selon la revendication 10, **caractérisée en ce que** le coussin de siège est pourvu, à l'intérieur, d'un élément en forme de fil (24, 25) qui possède un élément d'engagement (33) qui est disposé à l'arrière de l'élément de suppression de déplacement vers l'avant dans une direction longitudinale de la carrosserie du véhicule et qui est approprié pour être engagé avec l'élément de suppression de déplacement vers l'avant (3) depuis un côté arrière de celui-ci dans la direction longitudinale de la carrosserie du véhicule, pendant une collision frontale du véhicule.

12. Structure de siège de véhicule selon la revendication 11, **caractérisée en ce que** l'élément d'engagement comporte un tronçon en saillie (34, 35) qui est constitué par une partie de l'élément en forme de fil (24) et qui est situé à l'arrière de l'élément de suppression de déplacement vers l'avant (3) dans la direction longitudinale de la carrosserie du véhicule et qui est réalisé pour faire saillie dans une direction vers l'arrière de la carrosserie du véhicule.

13. Structure de siège de véhicule selon l'une des revendications 10 à 12, **caractérisée en ce que** l'élément de suppression de déplacement vers l'avant (3) comporte une paire d'éléments en forme de barres (3, 3) qui sont agencés l'un à côté de l'autre dans la direction latérale de la carrosserie du véhicule de telle sorte qu'un espacement entre ceux-ci est graduellement réduit, dans une vue de dessus, dans la direction vers l'avant de la carrosserie du véhicule.

14. Structure de siège de véhicule selon l'une des revendications 10 à 13, **caractérisée en ce que** le plancher possède un couvercle de trou de service qui est agencé au-dessous du coussin de siège et qui est approprié pour couvrir un trou de service pour accéder à un réservoir de carburant (14) disposé au-dessous du plancher, l'élément de suppression de déplacement vers l'avant étant fixé de manière amovible à la carrosserie du véhicule sur un côté supérieur du couvercle de trou de service.

15. Structure de siège de véhicule selon l'une des revendications 1 à 14, **caractérisée en ce que** l'élément de suppression de déplacement vers l'avant est un élément anti-sous-marinage (3) réalisé dans une forme allongée.
